(19) Europäisches Patentamt
European Patent Office
Office européen des brevets

(11) **EP 1 554 550 B1**

(12) **EUROPEAN PATENT SPECIFICATION**

(45) Date of publication and mention
of the grant of the patent:
**08.04.2015 Bulletin 2015/15**

(21) Application number: **03748323.7**

(22) Date of filing: **18.09.2003**

(51) Int Cl.:
***G01F 1/74*** *(2006.01)*   ***G01F 1/66*** *(2006.01)*

(86) International application number:
**PCT/GB2003/004134**

(87) International publication number:
**WO 2004/027350 (01.04.2004 Gazette 2004/14)**

(54) **DETECTION AND MEASUREMENT OF TWO-PHASE FLOW**

DETEKTION UND MESSUNG EINER ZWEIPHASENSTRÖMUNG

DETECTION ET MESURE D'UN ECOULEMENT BIPHASE

(84) Designated Contracting States:
**AT BE BG CH CY CZ DE DK EE ES FI FR GB GR HU IE IT LI LU MC NL PT RO SE SI SK TR**

(30) Priority: **19.09.2002 GB 0221782**

(43) Date of publication of application:
**20.07.2005 Bulletin 2005/29**

(73) Proprietor: **Spirax-Sarco Limited**
**Cheltenham, Gloucestershire GL53 8ER (GB)**

(72) Inventors:
• **UNSWORTH, Peter, Joseph**
**Lewes**
**East Sussex BN7 1HG (GB)**
• **HIGHAM, Edward, Hall**
**Redhill**
**Surrey RH1 6RN (GB)**
• **PUSAYATANONT, Mongkol**
**Sussex BN1 9QT (GB)**

(74) Representative: **McCartney, Jonathan William et al**
**Haseltine Lake LLP**
**Redcliff Quay**
**120 Redcliff Street**
**Bristol BS1 6HU (GB)**

(56) References cited:
**EP-A- 0 519 752     US-A- 4 300 399**

• **PEROVIC S ET AL: "Fault detection and flow regime identification based on analysis of signal noise from electromagnetic flowmeters" PROC. INST. MECH. ENG. E, J. PROCESS MECH. ENG. (UK), PROCEEDINGS OF THE INSTITUTION OF MECHANICAL ENGINEERS, PART E (JOURNAL OF PROCESS MECHANICAL ENGINEERING), 2001, MECH. ENG. PUBLICATIONS FOR IMECHE, UK, vol. 215, no. E4, 2001, pages 283-294, XP009031529 ISSN: 0954-4089**
• **PUSAYATANONT M ET AL: "Analysis of the sensor signal from a turbine flowmeter to recover information regarding the flow regimesal vortex flowmeter" PROCEEDINGS 11TH INTERNATIONAL CONFERENCE ON FLOW MEASUREMENT, FLOMEKO 2003, 12 May 2003 (2003-05-12), XP002282613**
• **FERREIRA V C S: "Differential pressure spectral analysis for two-phase flow through an orifice plate" INT. J. PRESS. VESSELS PIP. (UK), INTERNATIONAL JOURNAL OF PRESSURE VESSELS AND PIPING, ELSEVIER, UK, vol. 73, no. 1, August 1997 (1997-08), pages 19-23, XP002282614 ISSN: 0308-0161**
• **KHAN H J ET AL: "STATISTICAL CHARACTERIZATION OF AIR WATER BUBBLY FLOW USING DIFFERENTIAL PRESSURE DROP MEASUREMENTS" ASME FLUIDS ENGINEERING DIVISION MEETING, vol. 165, 20 June 1993 (1993-06-20), pages 137-144, XP009022351**

## Description

This invention concerns improvements in or relating to monitoring two-phase fluid flow, and in particular to detecting the presence of a second-phase component in the flow, and to measuring the flow rates of one or more of the components.

In some industries, such as the oil industry, a flowing fluid may not be a single component. For example, it may be a hydrocarbon liquid in which there is entrained a significant proportion of hydrocarbon gas, or it may be the reverse where the principal component is a hydrocarbon gas which is carrying a significant proportion of hydrocarbon liquid in the form of droplets. Alternatively, if may be a single component fluid flowing under conditions of pressure and temperature where it can exist as either a liquid or gas. In many industries steam (as a gas) is used as a heat transfer or sterilisation medium. In steam generation, the steam quality in terms of its wetness (the degree to which liquid water is present) is an important characteristic influencing its commercial value as a source of heat energy and therefore the overall performance and efficiency of the relevant plant.

In general, the presence of a second-phase component in the flow changes the relationship between the primary measurement signal and the flow rate of the first or principal phase component. If the presence of the second phase were not anticipated, the error in the indicated value of the flow rate of the first component could be quite large and in certain instances, the flowmeter may cease to operate.

The present invention has reference to the detection of the presence of a second-phase component in the flow and to the determination of the relative magnitude of each phase in a two-phase gas-in-liquid or liquid-in-gas flow regime by analysis of the entire unconditioned signal from the sensor associated with the primary transducer of conventional single-phase flowmeters

The majority of manufacturing plants depend for their operation on the transport of fluids between the various units that are involved in the process operations and procedures. In general, it is single-phase liquids that are involved and the instrumentation that has been developed for this purpose has reached a high level of accuracy and reliability. However, in practice, irregularities in the operation of the plant occur from time to time which result in the single-phase flow becoming adulterated by a second fluid. In these circumstances, the performance of virtually all types of flowmeters becomes unreliable and inaccurate, leading to product not meeting quality specifications, with consequential loss of product, and even process shutdown.

In industry, the principal requirement of a flowmeter or other measurement system is to provide a signal for input to a process control system, or to measure a predetermined volume of fluid. To achieve this, it is customary to condition the measurement signal so that it provides a steady mean value of the flow rate, free from random low-level fluctuations, otherwise known as 'noise'. For single-phase flow operation the sensor signal is normally averaged over a time from a fraction of a second to several minutes, depending on the instrument and the application. This reduces the effect of inevitable fluctuations caused by turbulence or distortion of the flow regime, due to process or other installation effects, and yields a more steady reading, which is required for process control and management.

In this invention, to make the monitoring of two-phase flows possible using single-phase flowmeters, additional information attributable to the fluctuations is recovered from the sensor signal associated with the primary flow transducer. Laboratory studies have shown that when a fluid is flowing in a closed conduit, there is a basic background level of fluctuations in the signal from the primary sensor in many different types of flowmeters through which the fluid under observation is flowing. There are several sources of these fluctuations, including the effect of turbulence generated in the fluid as it flows along the pipe, and through pipe fittings such as flanges, elbows, bends and valves. There are also the effects resulting from the operation of process equipment such as pumps, filters and mixers.

The magnitude of these fluctuations in a single phase fluid flow is usually at least an order of magnitude lower than the mean level of the measurement signal, and often they are much smaller than that. They are widely identified as 'noise' and hitherto it has been customary to regard them as a nuisance, to be suppressed or discarded. However, laboratory measurements have shown that when a second phase is introduced into the flow, either fortuitously or intentionally, there is an immediate and dramatic increase in the level of this 'noise'. The various flow regimes that are generated in these circumstances are addressed by analysis of the entire unconditioned signal from the primary sensor of the measurement system. The information recovered by analysis of the relatively high frequency, i.e. above about 3 Hz up to 5 kHz or more, but at the same time very low level components of the sensor signal, i.e. the 'noise', enables the relative magnitudes of each phase in a gas-in-liquid or a liquid-in-gas flow regime to be determined.

In our co-pending UK Patent Application No 0212739.7 there is described a method of measuring single and two-phase fluid flow using a vortex flowmeter, in which various regimes of the flow are addressed by analysis of the entire signal from the primary sensor.

Ferreira V. C. S. (Int. J. Press. Vessels Pip. (UK), vol. 73, no. 1, August 1997, pages 19-23) discloses a method of measuring fluid flow rate in a two-phase fluid flow through a closed conduit including the disposition of a flowmeter in association with the conduit, the flowmeter being an orifice plate, the fluid in use flowing within the conduit through the flowmeter, comprising the steps of generating a signal indicative of the fluid flow rate, measuring the amplitude and frequency components of the unconditioned sensed signal, including any fluctuations in said sensed signal, and analysing at least one of the components of the sensed signal to determine a flow rate of at least one phase of the two-phase fluid.

Similar methods are disclosed in European patent application EP 0 519 752 A and Khan H. J. et al (ASME Fluids Engineering Division Meeting, vol. 165, 20 June 1993, pages 137-144).

Perovic S. et al (Proc. Inst. Mech. Eng. E, J. Process Mech. Eng. (UK), vol. 215, no. E4, 2001, pages 283-294) discloses the use of a swirl generator to determine the effects on the signal induced by the presence of swirl in the fluid flow.

It is therefore an objective of this invention to provide a method of detecting the onset or presence of two-phase fluid flow and, by measuring and analysing the entire unconditioned primary sensor signal from certain types of flowmeters, to yield either the volumetric flow rate or the mass flow rate of each component in a two component fluid flow, or the relative magnitudes of the phases in a single component two-phase flow, which is less susceptible to external sources of noise.

According to this invention, there is provided a method according to claim 1.

The method of the invention also includes the preliminary steps of calibrating the selected single-phase flowmeter by the use of two reference single-phase flowmeters, one for each phase, to accurately establish the flow rates of the individual components before they are mixed to form the two-phase flow to be measured by the selected single-phase flowmeter, in order to determine the relationship between the primary signal from the selected single-phase flowmeter, the fluctuations in the said signal, and the flow rates of the individual phases.

**Types of flowmeter**

It is important to appreciate that, although there is a wide variety of flowmeters, not all of them provide a measurement signal that is amenable to the signal analysis technique described hereinafter for detecting the onset or presence of two-phase flow, and determining the volumetric flow rate or the mass flow rate of each component in a two component fluid flow. For the purpose of this description, the conventional types of flowmeters that provide a suitable measurement signal are classified into four groups, as follows:

**Group 1** comprises those flowmeters in which the primary transducer generates a head or differential pressure measurement signal that has a square law relationship with the volumetric flow rate.

**Group 2** comprises those flowmeters in which the primary transducer generates an oscillatory measurement signal which is in the frequency domain, and the frequency is essentially proportional to volumetric flow rate.

**Group 3** comprises those flowmeters in which the primary transducer generates a complex oscillatory measurement signal in which is the phase shift of the sensor signal is essentially a function of the mass flow rate and the frequency is a function of the fluid density.

**Group 4** comprises electromagnetic flowmeters, which have two principal restrictions or limitations. The first is that they do not function on gases, or liquids unless they have some small level of conductivity. The second is that the signal processing, which is required to overcome the spurious signals generated at the interface between the electrodes and the flowing liquid, in practice eliminates all the 'noise' components of the electrode signal. Nevertheless, signal processing techniques are available which provide a compromise solution to this problem.

Table 1 shows a list of different types of flowmeter to which this invention is applicable, grouped according to the characteristics of their primary sensor signal, which determines the type of analysis required in this invention. Following Table 1 is a list of all the Figures in the document.

**Characteristics common to all groups**

In industrial applications, it is customary to average the sensor signal over a time likely to be preset at some value between a fraction of a second and several minutes, depending on the type of flowmeter and the application. While this reduces the effect of the fluctuations due to disturbance of the flow regime resulting from process and other installation effects, and yields a steadier signal that is preferred for process control and management, at the same time, it eliminates the higher frequency components of the sensor signal. It is, in fact, these components which carry the information from which the onset or presence of two-phase flow can be identified and the magnitude of each phase determined.

In general, the introduction into, or presence of a second-phase component in the flow results in a significant, and in some instances a dramatic change in the relationship between the primary measurement signal and the flow rate of the first phase component. If the presence of the second phase were not anticipated or recognised, the changed relationship could result in an error in the measured flow rate of the primary component, which would be large.

**Procedures common to all groups for identifying the presence of two-phase flow and determining the relative magnitudes of the phases.**

The procedure for identifying the presence or onset of two-phase flow is essentially the same for all the conventional single-phase flowmeters identified in Table 1. It involves calibrating the flowmeter over the entire range of flows of both the primary and secondary phase flows. This may appear to be an extravagant requirement but, although it involves the acquisition of a substantial number of data points, it is only a repetition of the procedure that is followed on completion of the manufacture for all the flowmeters mentioned above, when they are calibrated to determine their 'meter factor' or 'calibration constant'. The difference is that a calibration curve is acquired for each of the pre-selected primary flow rates in the presence of the a range of fixed flow rates of the secondary phase.

Figure 1 shows the test flow rig used to pump a controlled flow of water into which air can be injected to create two-phase flow. Both single-phase flows are measured before mixing, and by the flowmeter under test after mixing.

Figure 2 is a schematic diagram of a variable area (Gilflo™) flowmeter

Figure 3 is a schematic diagram of a V-Cone flowmeter.

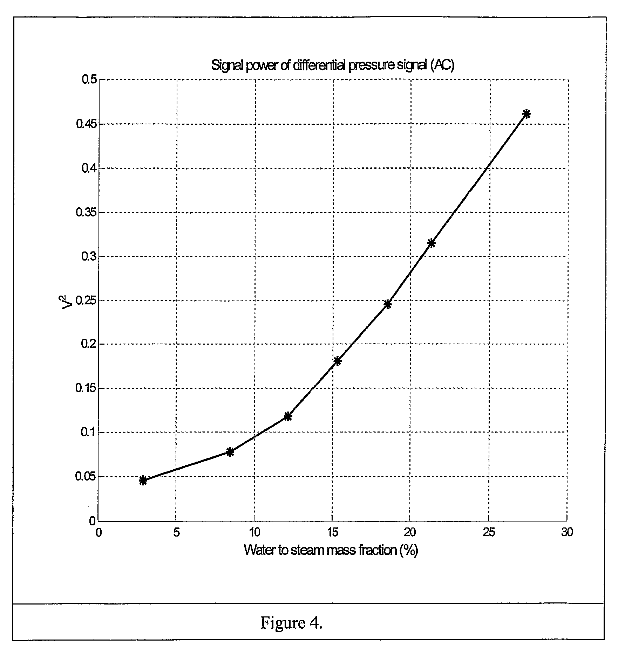

Figure 4 shows the mean square fluctuation of the differential pressure signal from a Gilflo™ meter under wet steam conditions as a function of water-to-steam mass fraction

Figure 5 shows the mean differential pressure signal from a Gilflo™ meter under wet steam conditions as a function of water-to-steam mass fraction

Figure 6 shows how the standard deviation of the differential pressure signal from a Gilflo™ flowmeter under wet steam conditions increases strongly with water-to-steam mass fraction

Figure 7 shows the Gilflo™ flowmeter time domain signal and the its frequency spectrum for wet stream at 3 % dryness fraction (97 % steam quality)

Figure 8 as for Fig.7 at 5.95 % dryness fraction (94.05 % steam quality)

Figure 9 as for Fig.7 at 11.3 % dryness fraction (88.7 % steam quality)

Figure 10 as for Fig.7 at 16.95 % dryness fraction (83.05 % steam quality)

Figure 11 as for Fig.7 at 22.6 % dryness fraction (77.4 % steam quality)

Figure 12 is a plot of the fundamental frequency signal from a turbine flowmeter versus single-phase liquid flow rate

Figure 13 shows the fluctuations in the successive blade passing times of a 2" 5-bladed turbine flowmeter

Figure 14 shows how the turbine flowmeter frequency calibration factor (the ratio of frequency to liquid flow rate) varies in the presence of different second-phase (air) flow.

Figure 15 shows how the standard deviation of the successive crossing time periods of a 2" 5-blade turbine flowmeter increases with the flow rate of a second phase (air)

Figure 16 shows how the standard deviation of the blade passing period $\tau$rms for different water flow rates varies according to the flow rate of a second phase (air)

Figure 17 shows the plot of a neural network output

Figure 18 is the schematic diagram of a flow loop for calibration of two-phase flow through an EM meter, with a flow conditioner placed just before the EM flowmeter.

Figure 19 EM flowmeter signal in time and frequency domains with 0 1/min of air flow with a flow conditioner upstream of the EM flowmeter

Figure 20 as for Fig.19 but with 5 l/min of air flow

Figure 21 as for Fig.19 but with 10 l/min of air flow

Figure 22 as for Fig. 19 but with 15 l/min of air flow

Figure 23 as for Fig. 19 but with 20 l/min of air flow

Figure 24 as for Fig.19 but with 25 l/min of air flow

Figure 25 as for Fig.19 but with 30 l/min of air flow

Figure 26 shows the variation in power of the AC component of the EM flowmeter signal with the percentage of air present in water with a flow conditioner

Figure 27 is the schematic diagram of a flow loop for calibration of two-phase flow through an EM meter, with a swirl generator placed before the EM meter to mix the phases in accordance with the present invention

Figure 28 shows the power spectra of an EM flowmeter signal under two-phase flow with strong swirl

Figure 29 shows the signal power of the AC component of the EM flowmeter signal plotted against the percentage of air in water, with swirling flow in accordance with the present invention

Figure 30 shows the mass flow rate measured by a single-phase Coriolis flowmeter plotted against the air in water fraction for various water flow rates

Figure 31 is as for Fig 30, but plotting the measured mixture density

Figure 32 is as for Fig.30 but plotting measured volumetric flow rate

Figure 33 shows the standard deviation of the frequency fluctuations calculated from frequency values measured by the Coriolis meter plotted against air-in-water fraction for various liquid flow rates

Figure 34 is as for Fig.33, but plotting the STD of phase fluctuations against air-in-water fraction

Figure 35 shows the Coriolis drive signal power plotted against air-in-water fraction for various water flow rates

Figure 36 shows the Coriolis sensor signal power plotted against air-in-water fraction for different water flow rates

Figure 37 shows the Coriolis drive to sensor signal ratio (DoS) plotted against air-in-water fraction for various water flow rates

Figure 38 is as for Fig.37, but with correction factor applied to the DoS signal

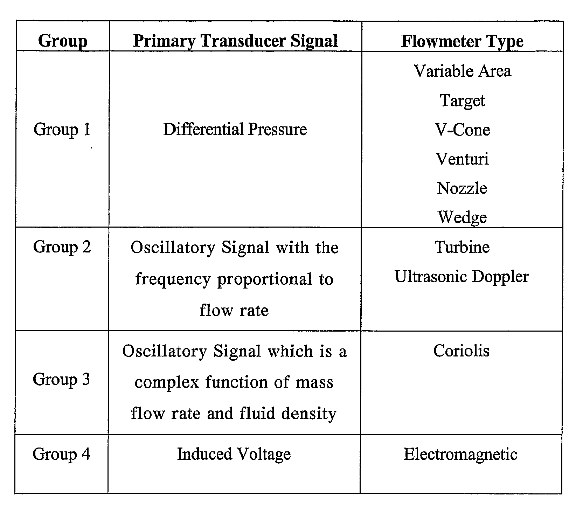

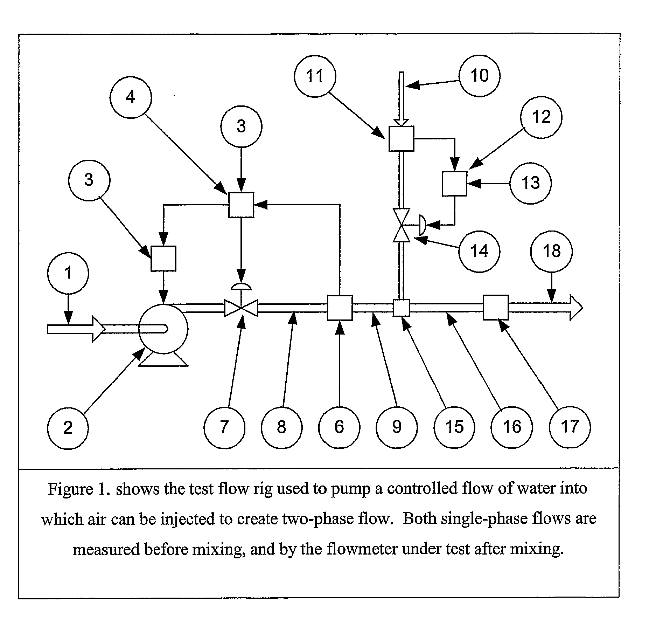

To implement the necessary calibration, the flowmeter has to be installed in a flow rig configured as shown in Figure 1. It must, of course, operate with the chosen fluids and, for their principal studies, the inventors have used water for the primary phase and air for the secondary phase. For tests involving the lower and medium flow rates, the water for the primary phase (1) is drawn from a reservoir by gravity feed while the pump (2) which is included in the flow loop is not energised. The desired flow rate for a particular test is applied as the set point (3) to a conventional process controller (4) where it is compared with the flow rate measured by the reference flowmeter (6). The controller then generates an output signal which is applied to the control valve (7) so that its setting is adjusted to bring the actual flow rate to the desired value. When the 'head' of the gravity feed is insufficient to provide the required flow rate for a test, the valve (7) is set fully open and the output signal from the controller (4) is transferred from the valve (7) to the variable speed drive (3) which, in turn, adjusts the speed of the pump (2) until the desired flow rate is achieved and then held constant.

The first flowmeter in the flow loop is a transfer standard flowmeter (6), or one which has the requisite accuracy and rangeability for the test programme. To ensure that its actual performance is in accordance with its specification, it is essential to adhere to the manufacturer's instructions covering its installation and use, particularly in respect of the provision of the recommended lengths of straight pipe both upstream (8) and downstream (9) of the flowmeter.

For the two-phase flow tests, the supply of compressed air (10) for the second phase is taken from the building services via an arrangement similar to that for the water supply. It involved a reference flowmeter (11) which covers the range of flow rates in the test programme with sufficient accuracy, a controller (12) and a control valve (14). In operation, the controller compared a signal representing the desired value of the flow rate (13) with that from the reference flowmeter (11) and generated a signal which, when applied to the control valve (14) brings the air flow rate to the desired value.

When required, the air is injected into the flow loop via a nozzle which is preferably located centrally in the pipe work at a point (15) downstream of the reference flowmeter (6) for the primary phase, so that it had no significant influence on the performance of that flowmeter. The flowmeter under test (17) is installed in the flow loop, downstream of the air injection point and separated by the recommended length of straight pipe (16). Beyond the instrument under test, a further straight length of pipe is provided (18) to stabilise the flow before it is discharged to the liquid reservoir.

The calibration of the flowmeter involves the conduct of a test programme to acquire performance data over a predetermined range of flow rates with single and two-phase flow. This yields a matrix of graphical data on the measured signal features, enabling the selected flowmeter to be used to determine the presence (or absence) of single or two-phase flow, and to determine the volumetric or mass flow rate of a single component flow, or the volumetric or mass flow rates of either or both components in two-phase flow. Because the inventors use air, which is compressible, for the second phase, it is essential to note the line pressure close to the flowmeter under test. When the flowmeter under test introduces a significant pressure drop itself, both the upstream and downstream pressures must be measured, so that the actual pressure at the primary transducer can be estimated.

The test procedure starts with the gathering of sufficient calibration points for the flowmeter under test against the transfer standard or reference flowmeter, to establish an accurate relationship between the measurement signal and the actual flow rate of the primary fluid over the desired operating range. The procedure is then repeated for the same series of primary fluid flow rates, but with the secondary phase introduced at the lowest in a series of predetermined flow rates covering the expected range of process conditions. The procedure is repeated for other pre-selected flow rates of the secondary fluid until sufficient data points have been gathered to cover adequately the expected range of process conditions.

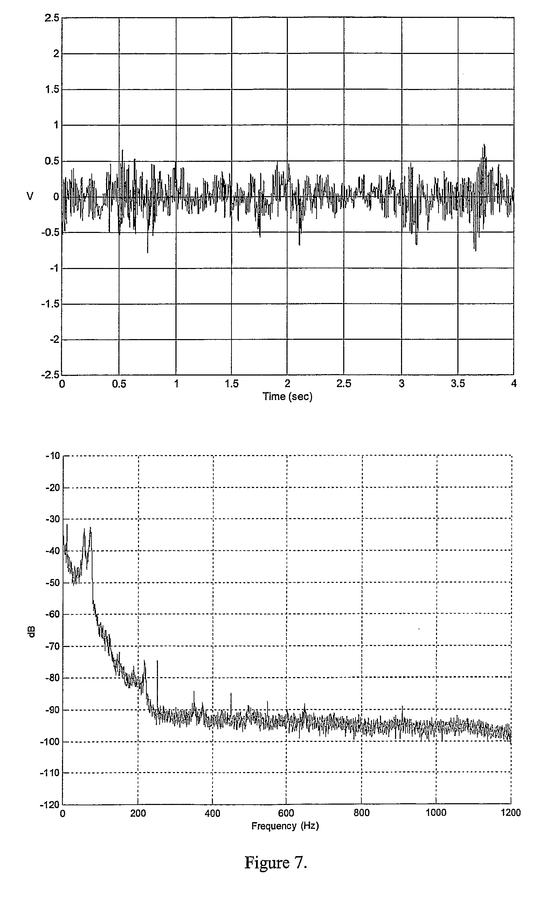

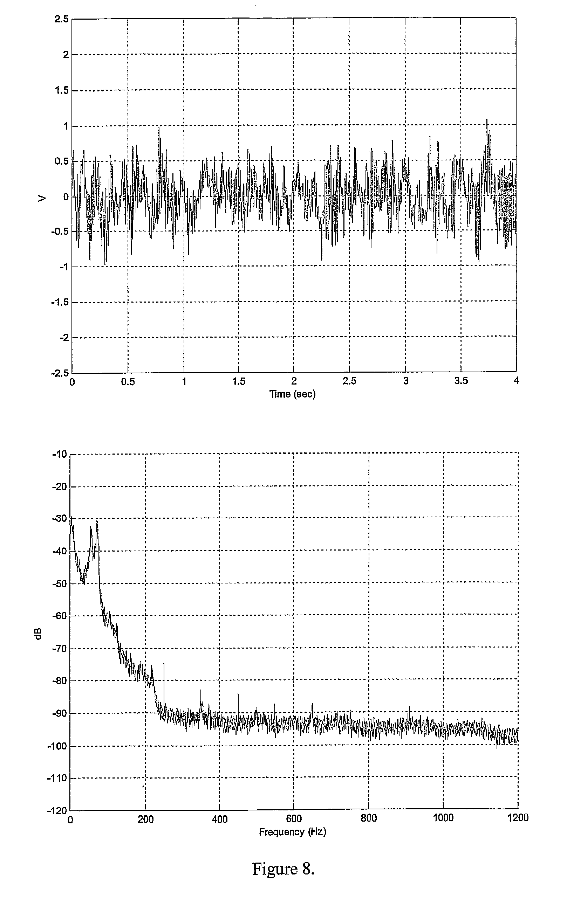

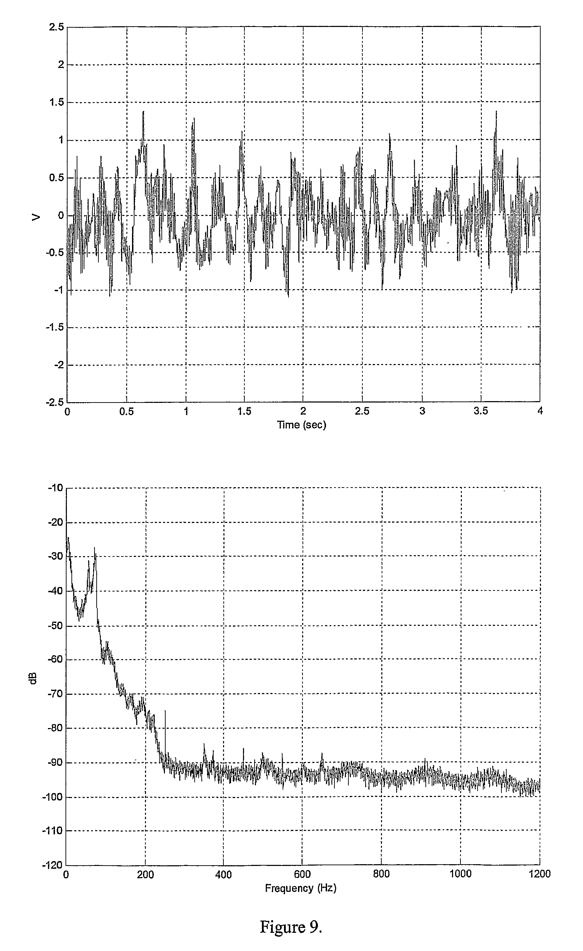

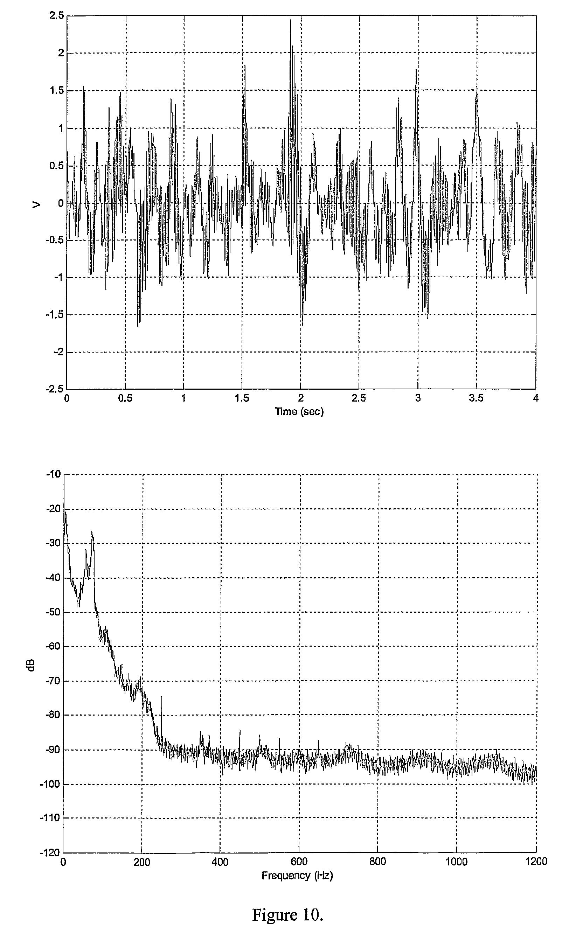

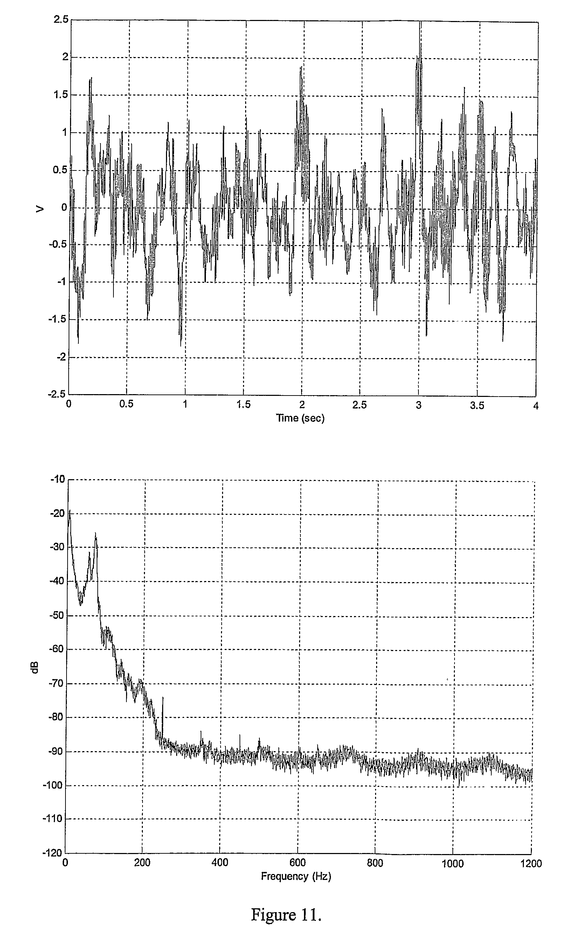

Each test typically involves allowing the flow in the loop sufficient time to stabilise, and then sampling the entire unconditioned sensor signal from the flowmeter under test at a high rate, e.g. 8 kHz, for a statistically significant period of time, e.g. 64 seconds, using a high resolution A/D converter, e.g. 14-bit. Each block of data can then be analysed using the Fast Fourier Transform. The results of such a series of measurements is shown in Figure 7 to 11.

Although the calibration procedure described above has been for two-phase air-in-water flow, it may also be carried out for two-phase water-in-air flow. In this case the primary fluid (air) is pumped into the calibration rig from an air turbine pump at a controlled flow rate measured by a primary phase reference flowmeter, and then the secondary phase (water), flowing at a measured flow rate, is injected into the air-flow upstream of the flowmeter to be calibrated for measurement of two-phase flow.

**Application to Group 1 flowmeters**

The types of flowmeter included in Group 1, namely, target flowmeters, Venturi tube flowmeters, nozzle flowmeters, wedge flowmeters, and variable area flowmeters, all operate in accordance with Bernoulli's Law:

$$P/\rho g + V^2/2g + z = \text{constant}$$

This expresses the relationship between the pressure P and the mean flow velocity V at a point within the flow of a single-phase fluid, at a height z above a

datum point, where $\rho$ is the fluid density at that point and g is the gravitational acceleration.

For all these flowmeters (apart from variable area flowmeters), the volumetric flow rate, $q_v$, is obtained by measuring the differential pressure $\Delta P$ between tapping points positioned at the recommended distances upstream and downstream of the primary transducer, using a relationship of the form:

$$q_v = K \ (\Delta P / \rho)^{1/2}$$

or equivalently

$$\Delta P = K' \ q_v^2 \ \rho, \text{ where } K' = 1/K^2$$

and K is a calibration constant that has a dependence on fluid properties via the Reynolds Number Re.

The mass flow rate, $q_m$, is given by $q_m = q_v \cdot \rho$

For the variable area flowmeter the quadratic relationship between differential pressure and flow rate is replaced by an essentially linear relationship, as described later.

These types of flowmeter involve the measurement of the difference in the line pressure at predetermined distances upstream and downstream of the primary transducer (the differential pressure producing device) and this is achieved using a differential pressure transmitter rather than two separate pressure transmitters. The reason for this is that the flowmeter itself is almost certain to be operated at a line pressure that is much greater than the span of the sensor and may even be as much as four orders of magnitude greater, which would obviously damage or destroy the sensor. Experience has shown that the use of a matched pair of pressure transmitters does not provide sufficient stability or sensitivity to achieve the required accuracy. Therefore a double diaphragm device is used to segregate the differential pressure ($\Delta P$) from the line pressure, so that a single pressure sensor with a narrow span and, in the context of this patent, one with a wide frequency response can be used.

The majority of the $\Delta P$ measurement systems at present used in the process industries have been designed and developed for applications where the prime consideration is the provision of an accurate and steady signal for process management or control purposes. They also have a robust construction to withstand the harsh environment in which they may have to operate, and they must be certified for use in hazardous environments.

Consequently, the response time of most of the commercially available $\Delta P$ measurement systems is adjustable between a fraction of a second and several minutes. This virtually eliminates the effect of the fluctuations due to disturbance of the flow regime caused by the process and other installation effects, and yields a steadier signal that is preferred for process control and management. However, it also eliminates the higher frequency components of the sensor signal, which, in fact, carry the information from which the onset or presence of two-phase flow can be identified and the magnitude of each phase determined.

However, there are some $\Delta P$ transmitters which have a frequency response up to several kHz, and these have been used in our laboratory tests, but their construction is insufficiently robust to withstand the harsh environments which exist in most industrial plants. Similarly, pressure transmitters with a frequency response up to 10 kHz are available, but their construction is also generally unsuitable for the harsh conditions which exist in industry.

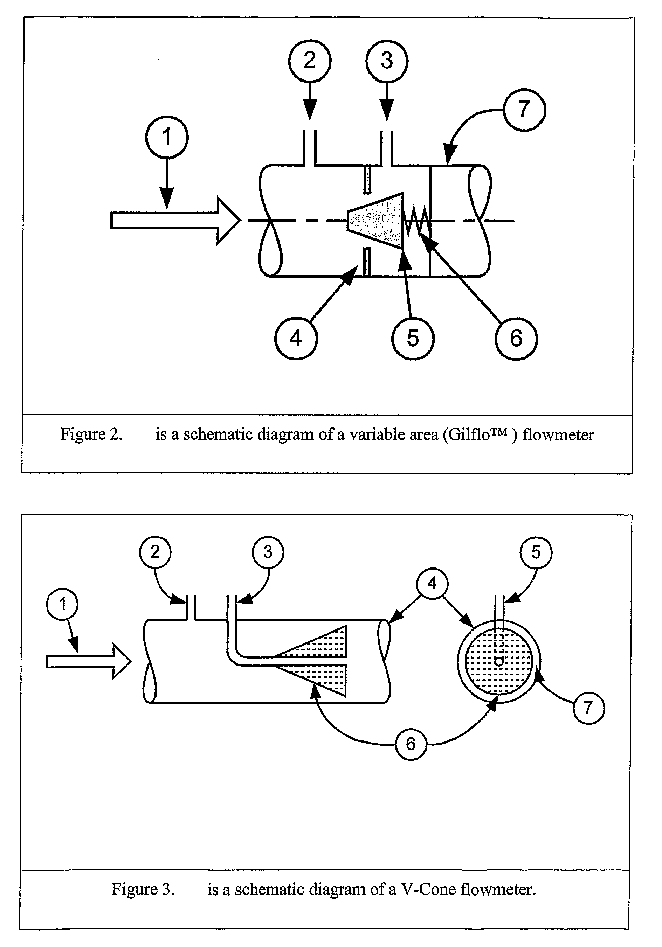

A further example of a differential pressure type flowmeter is the V-Cone™ flowmeter, shown in Figure 3. In it, the primary transducer is a cone (6) mounted co-axially in the conduit (4) through which the fluid is flowing in the direction shown (1), with the apex of the cone pointing upstream. It is held in position by the pipe through which the pressure at the downstream surface of the cone is communicated to the low pressure port (3) while the high pressure port (2) is located a short distance further upstream. The relatively small radial gap (7) between the base of the cone (6) and the inner wall of the conduit (4) is set to provide the required $\beta$ ratio. The differential pressure developed across the cone provides the square law relationship with flow rate but the pressure signal from the downstream port is particularly responsive to the increase in the 'noise' level due to the onset of two-phase flow.

Variable area flowmeters have been evolved to overcome the restricted range of the Group 1 flowmeters due to their square law relationship between the measurement signal and the flow rate. The variable area meter (Figure 2) is an example.. It comprises a contoured cone (5) that is loaded by a spring (6) and constrained to move co-axially within the conduit (7) and the orifice plate (4) by the action of the force of the fluid, flowing in the direction shown (1), This causes the effective area of the orifice to vary, thereby creating a flowmeter in which the differential pressure $\Delta P$, measured between the high pressure port (2) and the low pressure port (3) vary almost linearly with the volumetric flow rate $q_v$, rather than with the quadratic dependence of $\Delta P$ on $q_v$ for other differential pressure producing types of flowmeters.

Whereas these results illustrate the utilisation of information in the noise present in the sensor signal to enable measurement of the flow rates of both phases in water-in-steam flow where the principal component is steam, it will be appreciated that the same procedures may be applied to gas-in-liquid flow, where the principal component is liquid. With liquid-in-gas flow, it is particularly beneficial for consistent performance to ensure that the two components are well mixed on entry to the flowmeter e.g. by use of a Laws Flow Conditioner, as described in the paper "Flow conditioning - a new development" by Laws, E. M. published in Flow Measurement. Instrumentation, 1990 Vol.1 No3, 165-170.

By way of example only there follows a description of the utilisation of a variable area flowmeter, sold under the trademark Gilflo™, to generate a signal indicative of the volumetric flow rate of two components of two-phase gas-in-liquid fluid flows.

This variable area flowmeter has a particular advantage over the other meter types, because the turbulence created on both sides of the orifice produces effective mixing, even when the gaseous and liquid phases are unmixed as they approach the meter. Additionally, in the Gilflo™ meter, the differential pressure transducer can be eliminated by measuring the mechanical force exerted on the spring, for example by means of a strain gauge. The mixing achieved makes the instrument particularly suited to the important measurements of the quality of steam, and the proportion of condensed hydrocarbons carried in natural gas. Steam quality is the fraction of steam (by volume) in the total volume of water-steam mixture, and so equals the steam volumetric flow rate divided by the sum of the steam and water flow rates. Steam quality is an important measurement wherever steam is used as the source of heat in manufacturing processes.

To measure both liquid and gas flow rates, the fluctuations in the sensor signal are measured as well as the normal average value of the signal. The fluctuations may be found by calculating the root mean square signal fluctuation about the mean value of the signal samples. The mean signal value x of many sampled values $x(n)$ is first calculated according to

$$\bar{x} = \frac{\sum_{n=1}^{N} x(n)}{N}$$

where N is the number of sampled data points $x(n)$.

The root mean square amplitude $x_{rms}$ of the fluctuations about the mean value is then calculated from

$$x_{rms} = \sqrt{\frac{\sum_{n=1}^{N}\left(x(n) - \bar{x}\right)^2}{N}}$$

where N is the (large) number of sampled signal values $x(n).x_{rms}$ is the same as the standard deviation of the data samples.

Alternatively, the fluctuations may be obtained from the frequency spectrum of the sampled sensor signals.

In the plots that follow, all the pressure and differential pressure measurements have been made using transmitters which operate in 4 to 20 mA current loops, and associated signal conditioning circuits convert this into a 0 to +10 V signal corresponding to the range of the transmitter. It is this signal which is input to the analysis system. The vertical scale represents differential pressure, represented by a voltage that varies from 0 V at zero flow rate to + 10 V at maximum flow rate. The data was obtained by sampling the differential pressure signal at about 4,000 samples per second

In Figure 7 to 11, time domain plots are shown of the fluctuations in the differential pressure sensor signal, relative to the mean value, for a fixed steam flow rate and for seven different water flow rates. Also plotted alongside each of the time fluctuation plots is the frequency spectrum of the fluctuations, obtained by taking the FFT (Fast Fourier Transform) of the signal, and plotting the power spectrum up to 1,400 Hz. The rms pressure fluctuation may be calculated by summing the spectral powers at all the discrete frequencies in the spectrum, and then taking the square root of the result to give the result $\Delta P_{rms}$. Additionally, 'noise' in any finite range within the spectrum may be summed, but avoiding pressure pulsations attributable to the pump driving the flow.

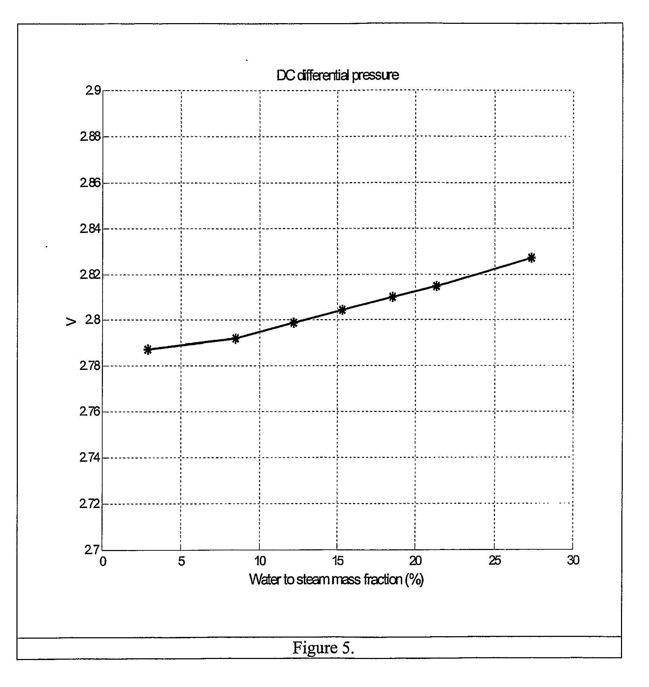

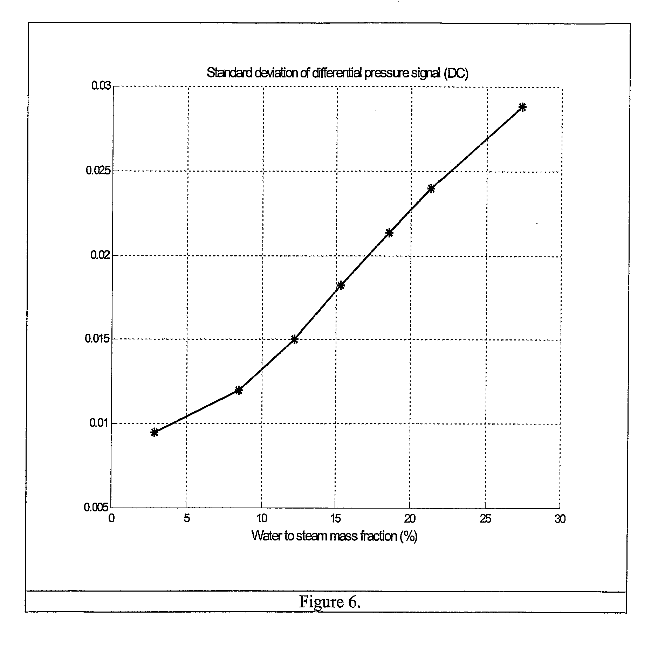

Figure 7 to 11 show clearly that the fluctuations in the pressure signal increase with the wetness of the steam flow, whereas Figure 5 shows that the average differential pressure drop is very little effected by the steam quality. Figure 6 shows the rms pressure fluctuation increases almost linearly for the variable area meter against the wetness of the steam, so that it can be used directly to measure wetness.

To determine the relative magnitudes of the individual flows in a two-phase regime, the flowmeter must first be calibrated involving the measurement and plotting of the primary and additional sensor signals over the range of single-phase flows of the primary fluid to be covered by the flowmeter. The procedure must then be repeated with the flow rate of the primary fluid held constant, but with the flow rate of the secondary fluid varied in steps throughout the range to be covered.

For any value of steam flow rate, the rms fluctuations vary strongly, in proportion to the flow rate of the injected water. It is clear that the increase in the rms fluctuation of the sensor signal discriminates between the sensor signals according to the amounts of secondary phase (water) introduced into the primary phase (steam).

Though the relationship between the four variables (steam flow, water flow, the primary signal, and the additional signal) is non-linear, a multi-layer neural network is capable of fitting complex non-linear data, and therefore provides a method for handling the observable data to produce a system which can yield good measured values for both the primary and the secondary phase flow rates.

Four input data values from the flowmeter may be used as inputs to the neural network. They are the primary signal (differential pressure $\Delta P$), and the addi-

tional signals: rms signal fluctuation $\Delta P_{rms}$, the squared fluctuation $(\Delta P_{rms})^2$, and the mean of the values of the logarithmic power spectrum of the fluctuations in $\Delta P$. The network is trained to generate two output values, the primary phase (steam) flow rate and the secondary phase (water) flow rate from the four input values.

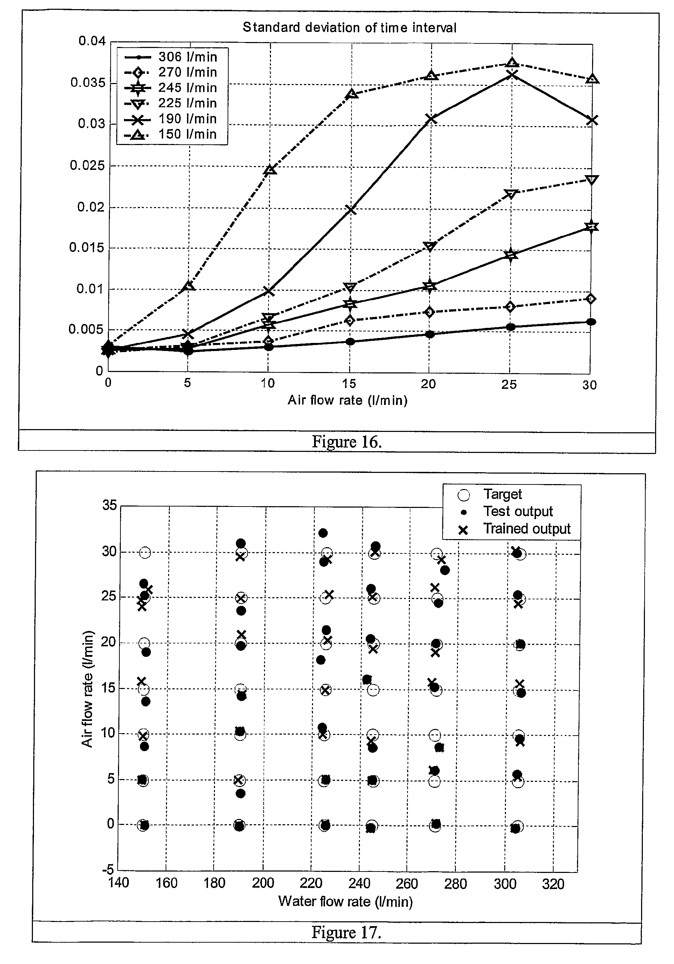

To train the neural network, two separate sets of data must be collected under the same two-phase flow conditions. As an example, the outputs of a neural network after training and testing are shown in Figure 17 for a turbine flowmeter. The coincidence of the training and testing data points indicates good repeatability of the measurements. Where points do not agree is a measure of the reproducibility and is probably due to instability of the flow regime in the test rig as well as not allowing sufficient time to estimate the mean and rms signal values.

**Application to Group 2 flowmeters**

The turbine flowmeter is the principal type in Group 2. It consists of a bladed rotor assembly running on bearings that are supported by a central shaft. The whole assembly is mounted centrally within the body of the flowmeter by upstream and downstream hangers, which also act as flow straighteners. The angular velocity of the rotor is proportional to the volumetric flow rate of fluid passing through the meter.

In the majority of these flowmeters, the primary sensor comprises a powerful magnet around which a coil is wound so that the change in the magnetic reluctance as individual rotor blades approach and pass the sensor generates a quasi-sinusoidal voltage signal. However, this imposes a very small retarding force on the rotor that adversely affects the performance of the flowmeter at low flow rates. This can be overcome by using an inductive sensor operating at audio or higher frequencies that develops a pulse type of transient voltage signal as each blade approaches and passes it.

In both cases, the signal is usually converted into a train of pulses by the associate signal condition circuits so that each pulse corresponds to the passage of a discrete volume of fluid. At constant flow, the driving torque generated by the fluid impacting the blades exactly balances the drag resulting from viscous forces acting on the rotor and any retarding force attributable to the sensor.

The flow rate may be obtained from the frequency of rotation of the rotor $f_t$ or, alternatively, the blade passing frequency $f_b$, apart from small corrections for non-ideal behaviour

$$\text{i.e.} \qquad q_v = K\,f_b = K\,f_t N_B$$

where $N_B$ is the number of blades on the rotor and K is a calibration constant.

Another flowmeter type which comes within this category is the ultrasonic Doppler flowmeter.

By way of example only there follows a description of the utilisation of a turbine flowmeter to generate a signal indicative of the volumetric flow rate of two components of two-phase gas-in-liquid fluid flows.

In the case of the turbine flowmeter, the primary signal is the turbine blade passing frequency $f_B$ and is seen as either a quasi sine wave or series of pulses associated with the passing of each blade past a reference position, depending on the type of sensor. The frequency $f_B$ may be obtained by measuring the time interval for the arrival of a number of pulses. An additional signal may be derived from the root mean square of the fluctuation in the intervals between successive pulses. Thus, if $N$ pulses arrive in time $T$, the frequency $f_B = N/T$, and the average period $\bar{\tau}$ between pulses arriving is $1/f_a$. If the time intervals between successive pulses are a series of times $t(n)$, the rms fluctuation $\square_{rms}$ in arrival times may be calculated from

$$\tau_{rms} = \sqrt{\dfrac{\displaystyle\sum_{n=1}^{N}\left(t(n) - \bar{\tau}\right)^2}{N}}$$

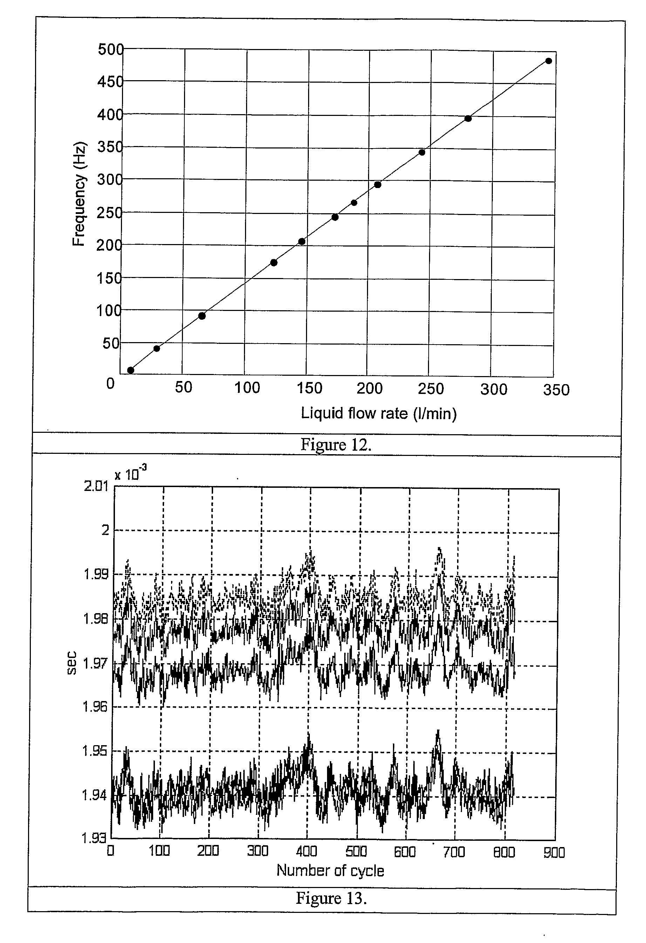

Figure 12 shows the basic calibration curve for a turbine flowmeter. The x-axis shows the fluid flow rate (water), and the y-axis shows the corresponding sensor signal frequency. Good proportionality is exhibited.

Figure 13 shows a plot of time intervals between successive pulses generated as each blade passes the sensor. The time interval averages 5 ms, but the intervals for successive pairs of blades in a turbine flowmeter with a five-blades rotor are seen to be slightly unequal. This is due to small differences in the spacing of the blades. Thus the top line shows a plot of the pulse interval before the arrival of blade 4 (i.e. the duration between pulses from blades 3 and 4). The plot shows an average time interval of about 5.05 ms, but it also shows fluctuations of about $\pm 0.02$ ms. Looking at the fluctuations between the 550th and 575th rotation cycle of all the blades, it is seen that the same fluctuation (a dip followed by a rise in the pulse periods) affects all five blades, indicating that it is caused by fluctuation in the flow regime.

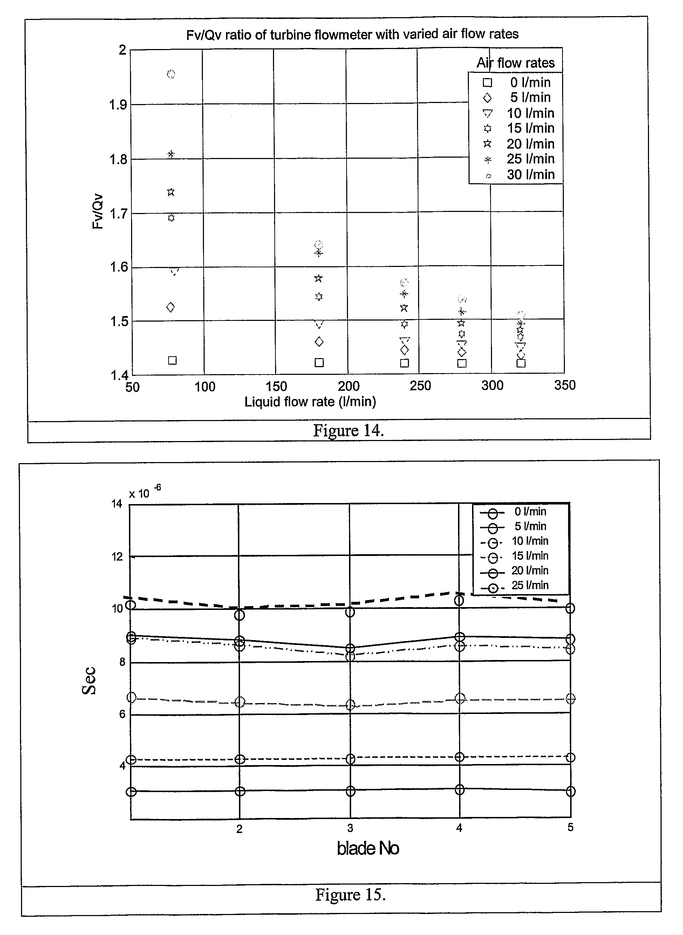

Figure 14 shows the effect of two-phase flow on a turbine flowmeter. Each point is the ratio $f_v/q_v$, of the measured turbine frequency $f_v$ to the water flow rate $q_v$ in the presence of differing air flow rates. The points nearest to the x-axis are all taken from measurements with water only (no air flow), and represent the behaviour of the meter as a single-phase instrument. The ratio is essentially constant at approximately 1.42 pulses/second per litre/minute, as it should be. However, when air is injected into the flowing water upstream of the flowmeter whilst keeping the water flow rate constant, the ratio changes very considerably (from 1.42 to 1.96 at the lowest water flows), showing that the flowmeter is unable to give a good reading for water flow in the presence of the second phase (air).

If, however, the rms fluctuation in the pulse interval $\tau_{rms}$ of associated with a specific pair of blades is measured (e.g. the fluctuation in any one trace in Figure 13), this is found to vary strongly with the flow rate of the second phase. This fluctuation is plotted in Figure 15 . Each line shows the values of $\tau_{rms}$ calculated for each pair of blades, as could be calculated from each trace in Figure 13. This is repeated at differing values of injected air flow rate, whilst keeping water flow rate constant. The level of the fluctuations is clearly indicative of the second phase (air) flow rate.

To determine the relative magnitudes of the individual flows in a two-phase regime, the flowmeter must first be calibrated involving the measurement of the entire unconditioned sensor signals over the range of single-phase flows of the primary fluid to be covered by the flowmeter. The procedure must then be repeated with the flow rate of the primary fluid held constant, but with the flow rate of the secondary fluid varied throughout the range to be covered. Figure 14 and Figure 16 are examples of such calibrations under two-phase flow, and represent the behaviour of the primary signal $f_v$ and the additional signal $\tau_{rms}$ under the same conditions, for calibration of the turbine flowmeter under conditions of two-phase flow.

As for the variable area meter, the relationship between the four variables (water flow, air flow, the primary signal, and the additional signal) is non-linear. Again, a multi-layer neural network is capable of fitting the non-linear data to provide a method for handling the observable data to produce a system to yield good measured values for both the primary and the secondary phase flow rates.

To train the neural network, two separate sets of turbine data must be collected under the same two-phase flow conditions. The outputs of the neural network after training and testing are shown in Figure 17. The coincidence of the training and testing data points indicates good repeatability of the measurements. Where points do not agree is a measure of the reproducibility and is probably due to instability of the flow regime in the test rig as well as not allowing sufficient time to estimate the mean and rms signal values.

Group 2 also includes ultrasonic flowmeters, which use high frequency sound waves to determine the velocity of a fluid flowing in a pipe. There are two basic types of ultrasonic flowmeter, one using the Doppler effect where the velocity of the fluid causes a change in the frequency of reflected sound waves, and another which uses the difference in time for a sound wave to travel against the fluid flow versus travelling with the fluid flow.

Doppler effect meters require the presence of sonically reflective materials such as small particles or bubbles travelling with the fluid flow. Under no flow conditions, the frequencies of an ultrasonic wave transmitted into a pipe and its reflections from the fluid are the same. Under flowing conditions, the frequency of the reflected wave changes due to the Doppler effect. When the fluid moves faster, the Doppler frequency shift increases linearly with fluid velocity. The electronic transmitter processes signals from the transmitted wave and its reflections to determine the flow rate.

Transit time ultrasonic flowmeters send and receive ultrasonic waves between transducers in both the upstream and downstream directions in the pipe. Under no flow conditions, it takes the same time to travel upstream and downstream between the transducers. Under flowing conditions, the upstream wave will travel slower and take more time than the (faster) downstream wave. When the fluid moves faster, the difference $\tau$ between the upstream and downstream times increases linearly with fluid velocity. The electronic transmitter processes upstream and downstream times to determine the flow rate.

Both types of ultrasonic flowmeter rely on the assumption the fluid is homogeneous. As soon as a second phase is introduced with different sonic properties there are variations in both the amplitude and frequency domain properties of the raw sensor signals. These variations can be used to determine the presence of a second phase and to measure the relative flow rates. Specifically, fluctuations in the Doppler frequency indicate the presence of a second phase, and a measure of the extent of the fluctuations indicates the relative flow rates of the two phases. The transit time ultrasonic flowmeter exhibits many of the characteristic variations shown by the turbine flowmeter in the presence of two-phase flow, with the rms fluctuation $\tau_{rms}$ in the pulse interval between the upstream and downstream transit times varying strongly with the flow rate of the second phase. Further, for both types of ultrasonic flowmeter, the presence of a second phase has a dampening effect on the sonic characteristics of the liquid resulting in changes to the amplitude of the sensor signals.

**Application to Group 3 flowmeters**

Coriolis flowmeters are the principal type in Group 3. There are many variations in the design of the primary transducer, the simplest being a straight tube, anchored firmly at both ends and driven electromagnetically at its centre to resonate at the natural frequency of the tube. Various designs of bent tube transducers also exist.

The principle of operation is the Coriolis effect or conservation of angular momentum due to the Coriolis acceleration of a fluid stream. Many different configurations of the tubes which form the primary transducer in Coriolis mass flowmeters have been developed and exploited commercially, as well as alternative methods for exciting the tubes and sensing their motion, but in recent years, the development has become focused on the use of a straight tube as the primary transducer. When an excitation force is applied at the centre and perpendicular to the axis of a straight tube firmly anchored at each end, causing it to vibrate, the Coriolis acceleration of the fluid flowing through the tube generates forces acting on the tube in opposite directions on either side of the applied driving force. During the first half cycle of the oscillation, the displacement of the leading half of the tube is retarded while that of the trailing half of the tube is accelerated. This gives rise to a shift in the phase of the signals from sensors placed midway between the point of application of the driving force and the two fixed ends of the tube. During the second half cycle of the oscillation, the displacement of the leading half of the tube is accelerated while that of the trailing half of the tube is retarded. This gives rise to a reversal of the phase difference between the signals from the two sensors. The magnitude of this phase shift is a function of the mass flow rate while the frequency of the resonance is a function of the density of the flowing fluid.

There are at least three methods of providing a means for detecting and measuring the presence of a second phase. Firstly, the fluctuations in the drive frequency increase strongly as the gas fraction (the second phase) is increased, and may be used to measure it. Secondly, the phase difference between the two sensor signals, which is the fundamental quantity used to measure liquid mass flow rate, also shows fluctuations that increase strongly as the gas fraction is increased, and may be used to measure the gas fraction.

Finally, the drive power required to maintain the resonant oscillation of the tube is directly affected by viscous losses within the air-gas mixture that increase with the fraction of gas present in the liquid-gas flow. As the gas fraction increases, greater drive power is needed for a given amplitude of sensor signal. In practical applications, the drive power may have to be limited due to various constraints such as fatigue stress due to the amplitude of mechanical excitation and the limitation of the power which is necessary to meet the requirements for intrinsic electrical safety. However, the ratio of drive power to the sensor signal may be used to determine the gas fraction.

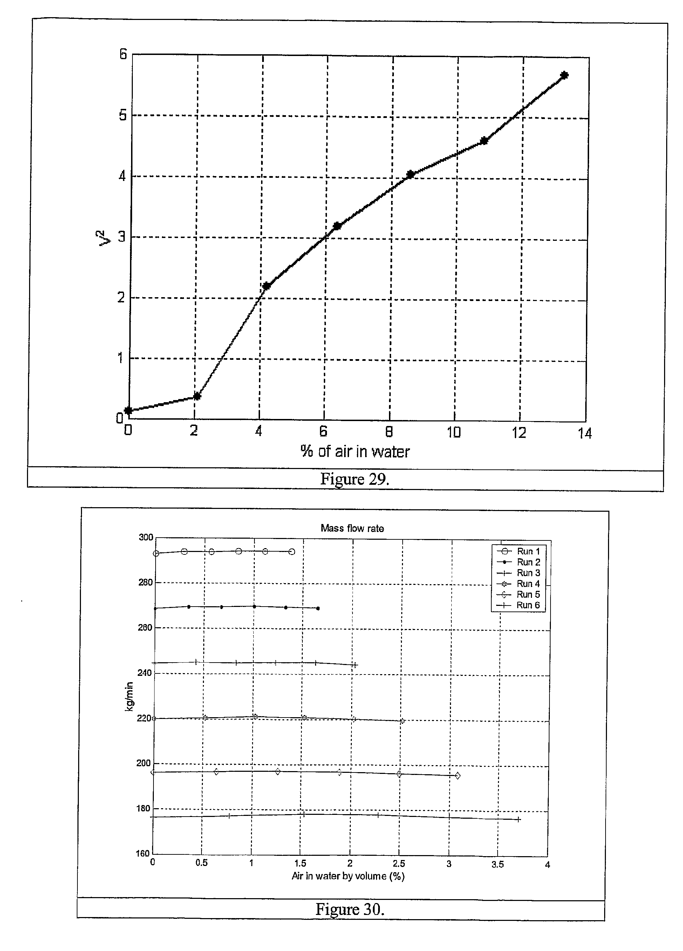

Figure 30 to 38 show measurements taken under two-phase flow conditions (air-in-water) with a Coriolis flowmeter. Figure 30 shows the mass flow rates displayed by the Coriolis meter from a series of runs in which the water mass flow rate was held constant whilst air was injected upstream of the meter in six steps up to the maximum air fraction at which the meter could function. This was repeated for six different water flow rates between 196 and 295 litres/min. The displayed readings show small errors.

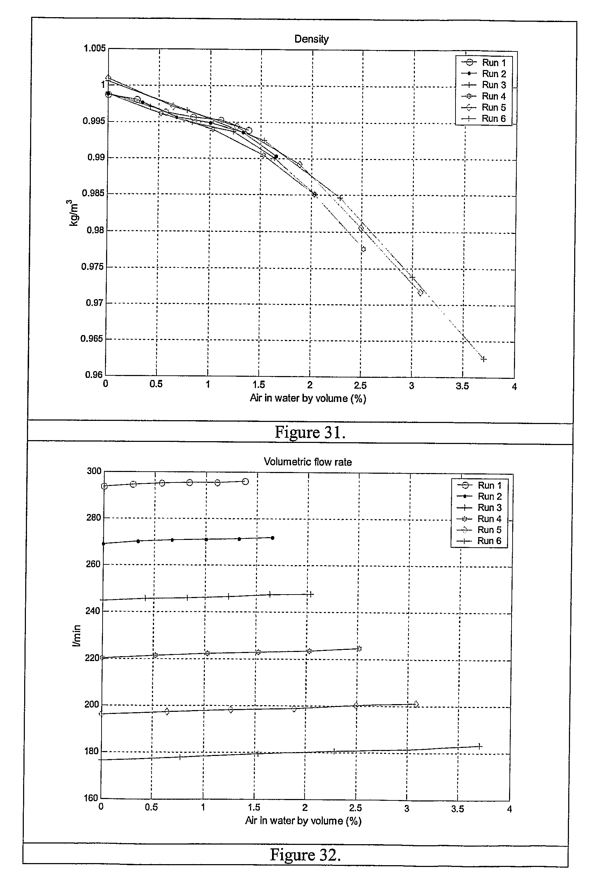

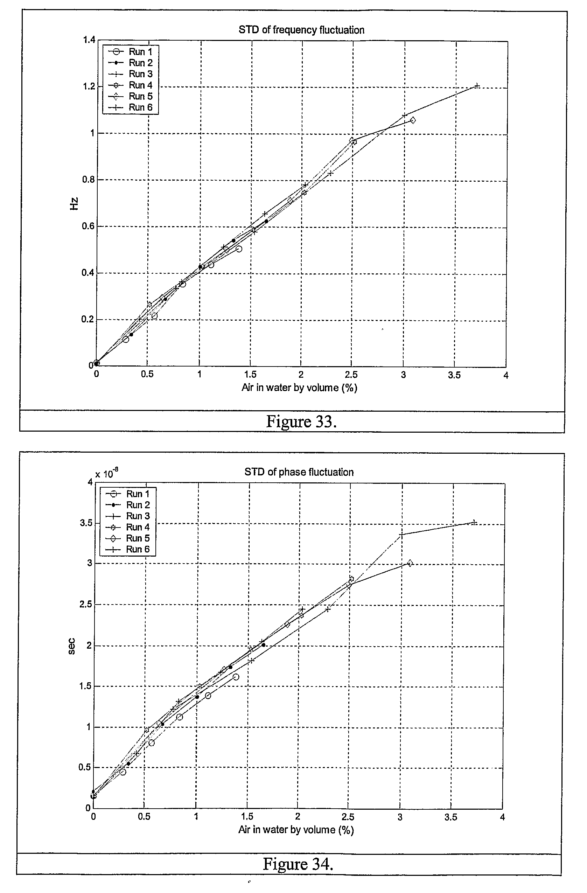

Figure 31 shows the density of the mixture as measured by the meter, derived from the drive frequency. This would be a straight line if the meter measured the average density of the mixture, so that it is not possible to deduce the correct value of the air flow from the change in density. However, the randomness of bubble size and position in the tube causes the resonant frequency of the oscillating tube to fluctuate, so that if the value of the drive frequency is also sampled, and the standard deviation of the frequency values ($\Box f_{rms}$) is calculated (it is the same as the root mean square deviation from the average frequency), the rms frequency fluctuation is found to vary almost linearly with air fraction (standard deviation). This variation of $\Box f_{rms}$ against injected air fraction is plotted in Figure 33. A calibration procedure allows $\Box f_{rms}$ to be used to measure air fraction, and to correct errors in the measured liquid mass flow rate.

Likewise, the fluctuation in the phase difference between the sensor signals can be sampled, and its standard deviation is show in Figure 34 to enable air fraction to be measured, after calibration.

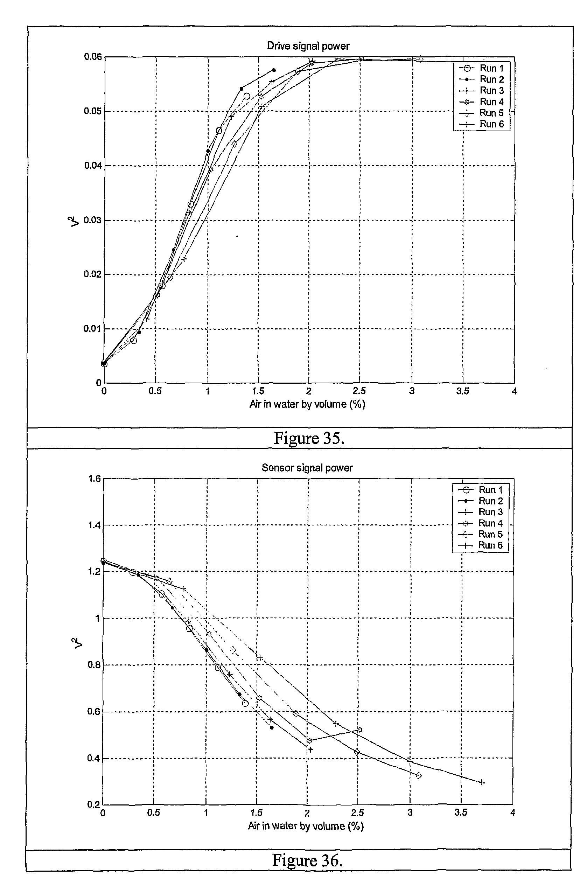

Data samples of drive power, sensor power (amplitude squared), and the ratio of drive power to sensor amplitude, were all collected during the experiments, and average values are plotted against air fraction in Figure 35 to Figure 37. The ratio varies with air fraction, but also with pressure. If the quantity

$$\left( \frac{drive\_power}{sensor\_power} \right) * pressure$$

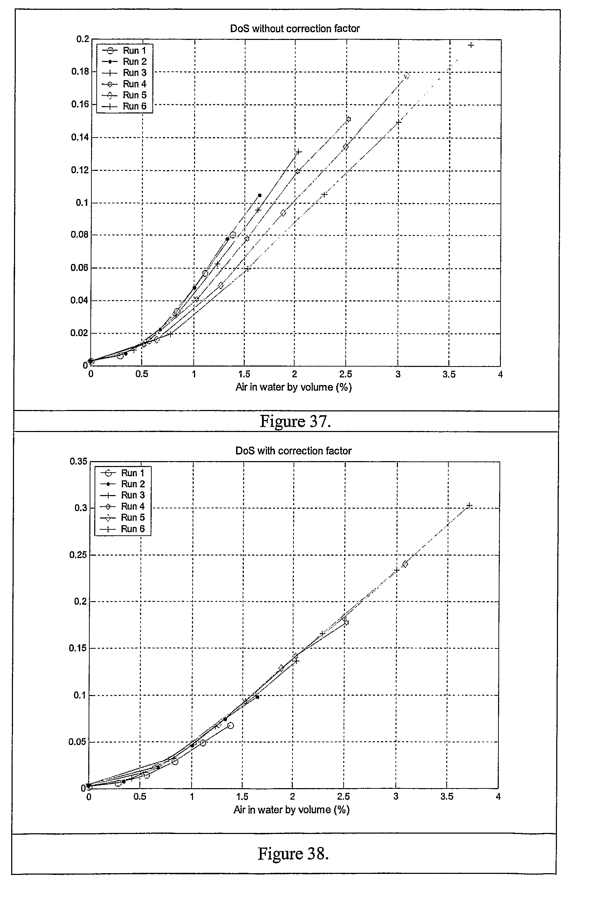

is plotted as in Figure 38, a single curve indicative of volumetric air fraction is obtained. Again, in order that correct liquid and gas flow rates are obtained under two-phase flow conditions, a calibration procedure is must be carried out so that the two flow rates may be obtained directly from the data.

Application to Group 4 flowmeters

Group 4 covers electromagnetic flowmeters, which have the disadvantages that they will only function satisfactorily on fluid flows where the primary phase is liquid and at least slightly conductive, and they do not function at all if the primary phase is gas. However, laboratory tests have shown that, if the conventional modulation of the magnetic field is replaced by steady state excitation, the introduction of a gaseous phase into a single-phase (conductive) liquid flow results in a distinct change in the power and frequency spectra of the electrode signal which can be correlated with the presence and magnitude of a second phase in the flow.

It is important to appreciate that, in their normal mode of operation, the magnetic field in this type of flowmeter is modulated at a relatively low frequency, e.g. about 12 Hz, so that the electrochemical and other spurious effects which occur at the interface between the flowing fluid and the metal electrode can be eliminated. In implementing this, the signal processing circuits eliminate the low frequency and very low-level components of the signal on which detection of the change due to the presence of the second phase flow is dependent.

Hence, to apply the procedures for detecting the onset or presence of two-phase flow in a (conductive) fluid, it is necessary to modify the mode of operation of a conventional electromagnetic flowmeter so that, for the majority of the time it operates in its normal mode but either on demand or at predetermined intervals, the modulation of the electromagnet is interrupted and replaced by steady state excitation of the electromagnet while data is gathered from the electrodes for a brief period, e.g. 32 seconds, and then analysed as described previously.

It should be noted that this procedure only affects the signal conditioning circuits and does not affect the design, construction or intrinsic safety considerations for the flowtube.

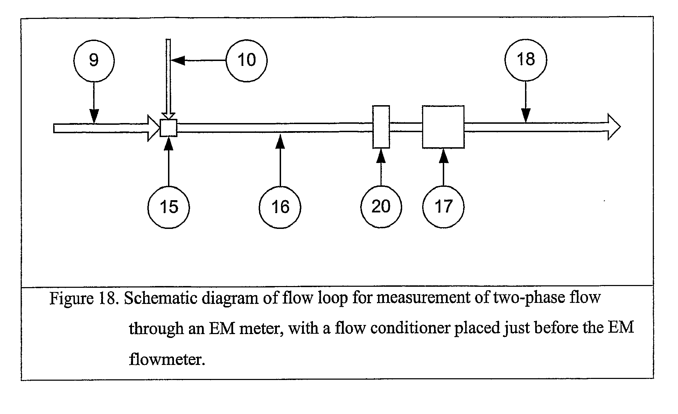

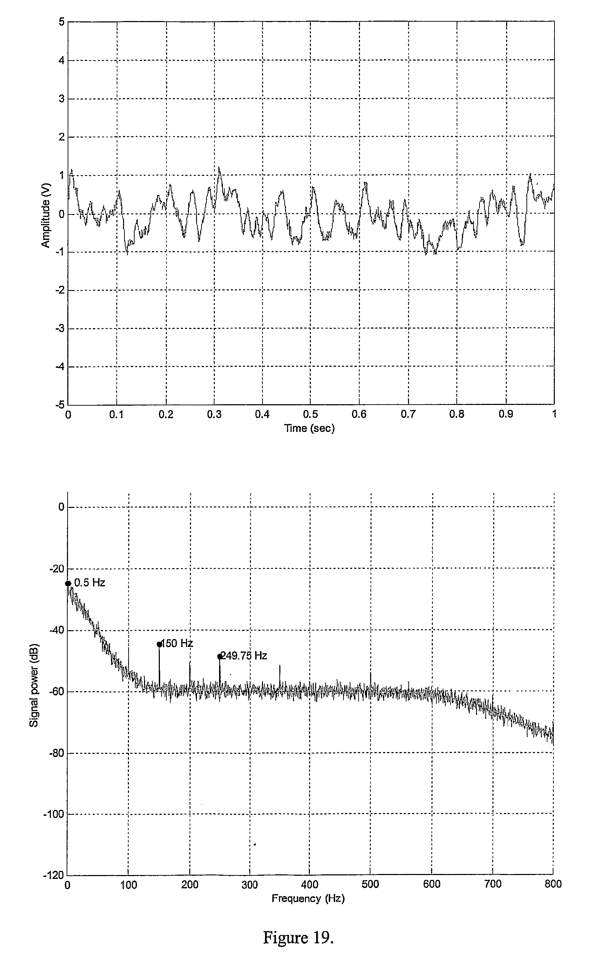

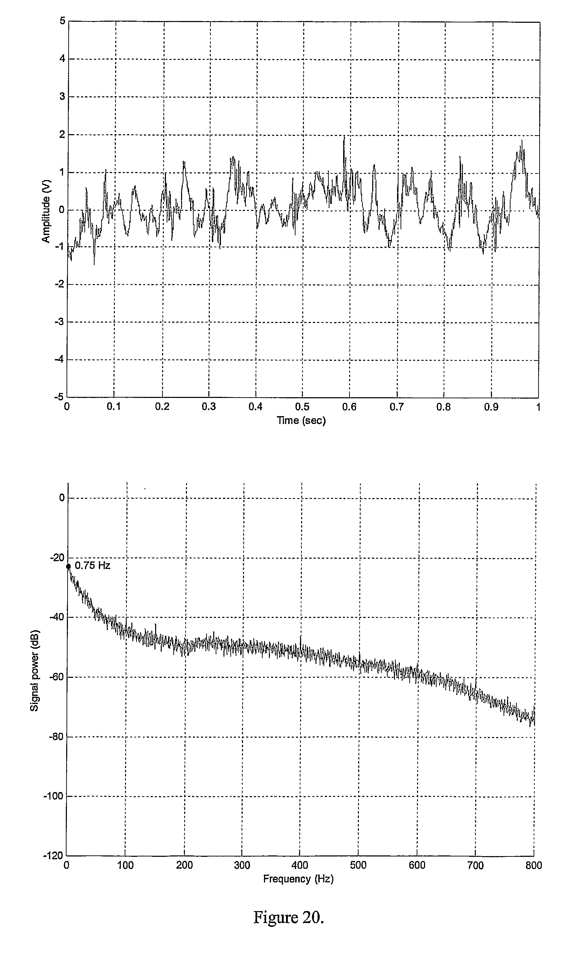

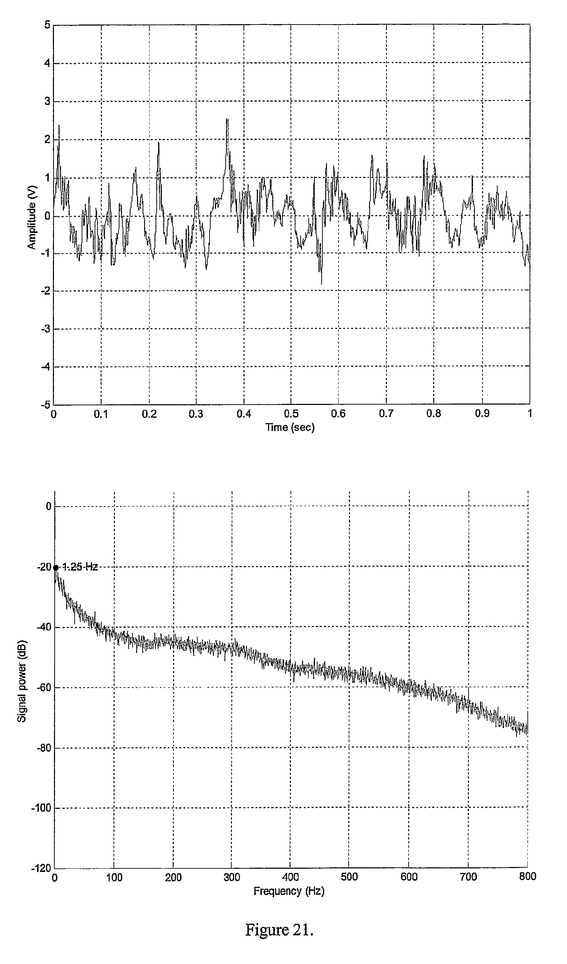

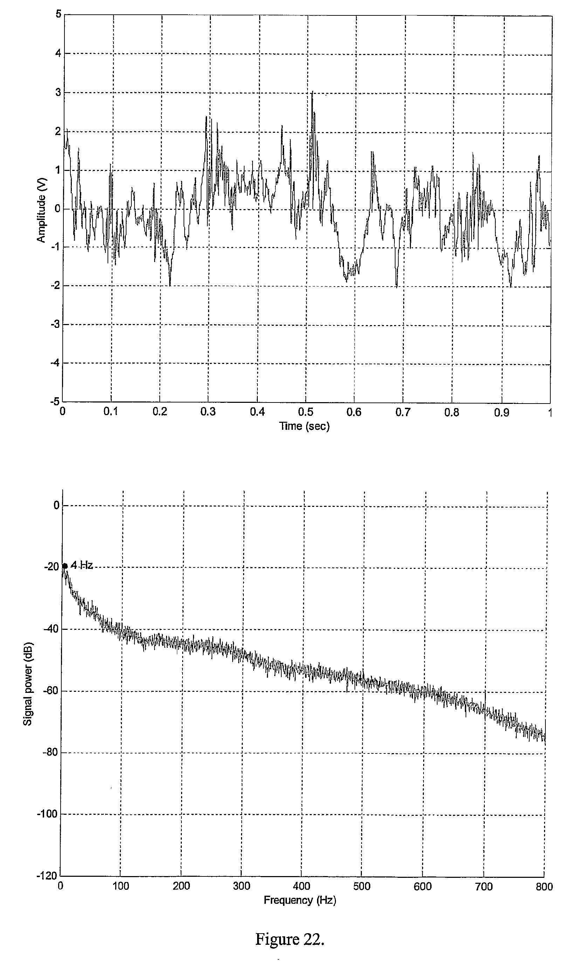

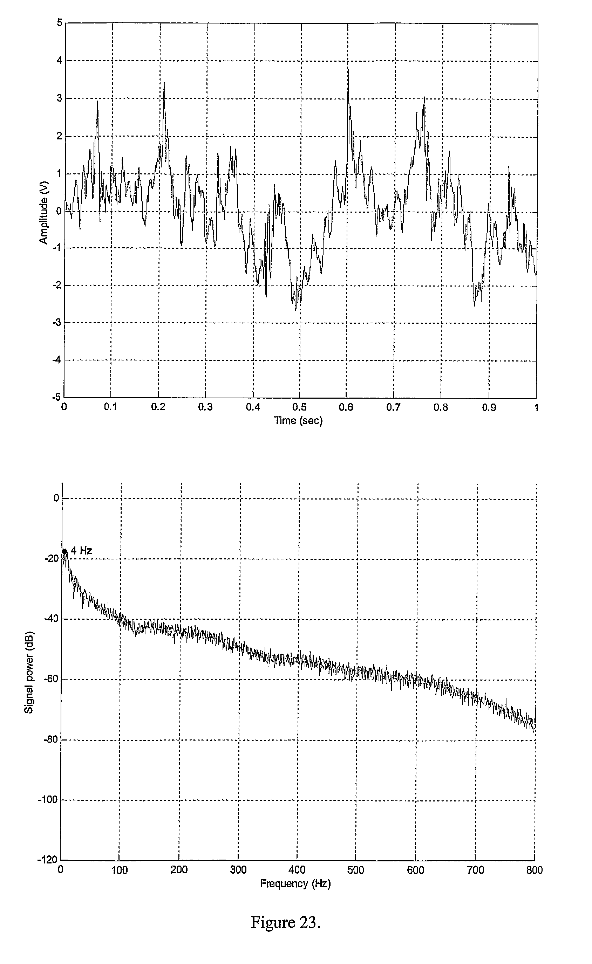

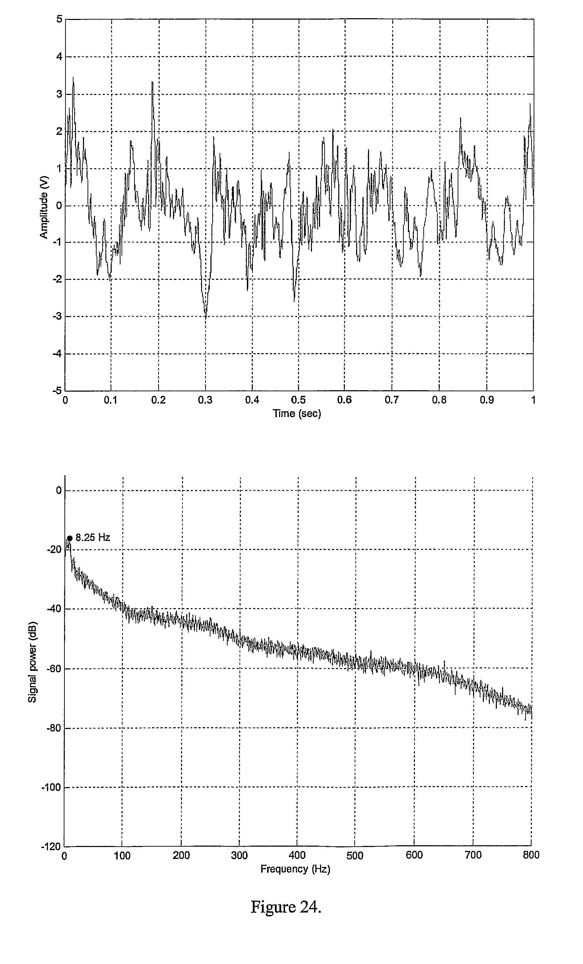

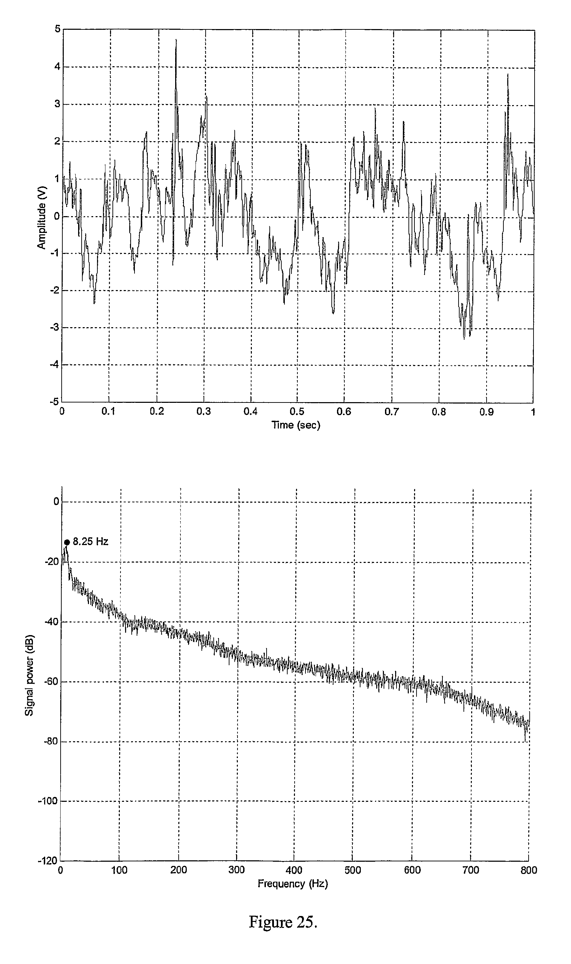

Figure 19 to 25 show time plots of the noise fluctuations in the unconditioned sensor signal from an EM flowmeter, after amplification, at increasing fractions of air injected into liquid flow. The flow rig used to collect the data is essentially the same as that shown in shown in Figure 1. It is only the section between the air injection point (15) and the flowmeter under test (17) that is changed, as shown in Figure 18 Water, drawn at a controlled flow rate from the source as previously described, is delivered via a straight length of pipe (9) to the air injection point (15) where it combines with the flow of air (10) also delivered at a controlled flow rate also as previously described. From the air injection point, the fluid is taken via a straight length of pipe (16) approximately 40 pipe diameters long to a flow conditioner (20) which in turn is located about 3 pipe diameters upstream of the flowmeter under test (17). Beyond this, the flowing fluid is delivered to the reservoir via a pipe (18) of sufficient length to avoid any adverse influence on the operation of the flowmeter under test.

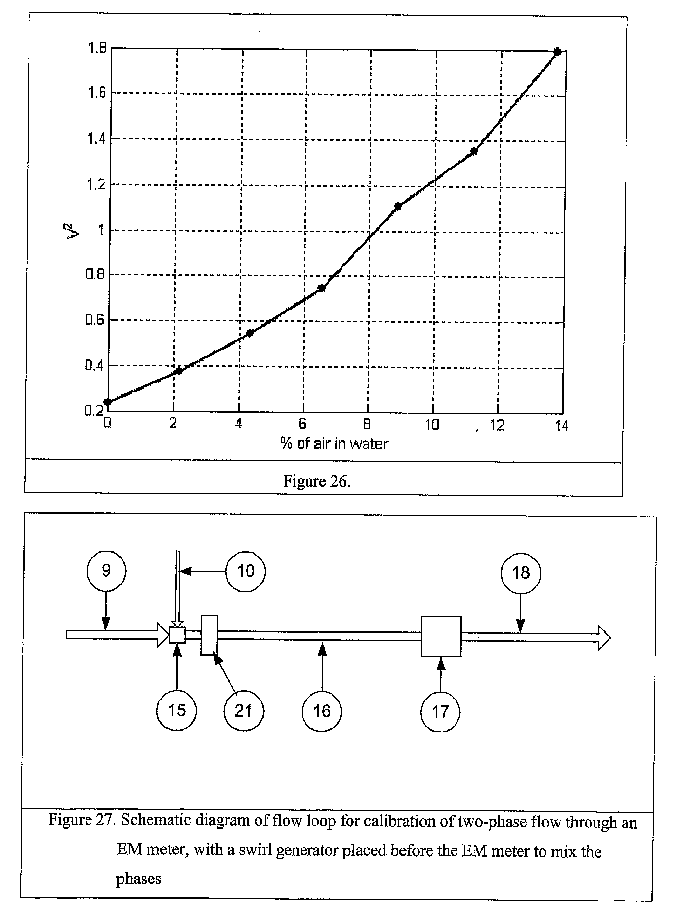

Figure 26 shows that there is a steady increase in the mean square noise power as the percentage of air-in-water is increased. This noise may be used directly to measure the air fraction. Alongside the time plots in Figures 19 to 25 are plots of the noise power spectra obtained by taking the FFT of the noise signal data.

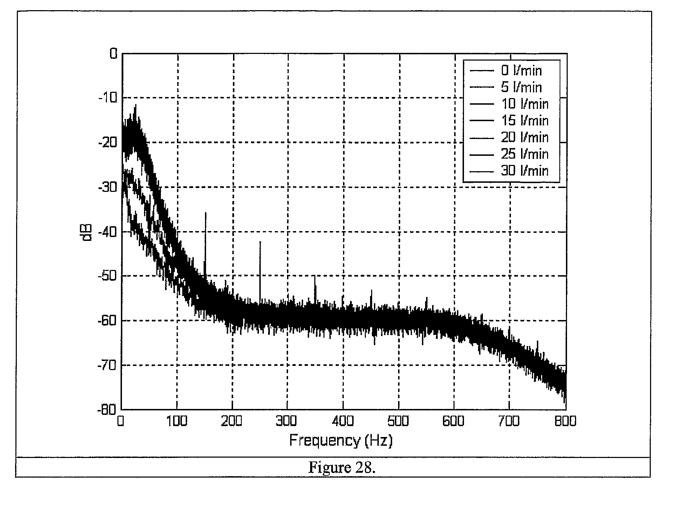

In order to obtain more reproducible results, it is advantageous to put the two-phase mixture through a mixer before it enters the flowmeter. For this purpose, a Laws flow conditioner has been included in the flow loop upstream of the flowmeter, as shown in Figure 18. An alternative approach, taken by the present invention, is to include a swirl generator upstream of the flowmeter, as shown in Figure 27, which is essentially the same as Figure 18, except that Flow Conditioner has been removed and a Swirl Generator (21) has been inserted adjacent to the outlet from the air injection point (15).. This has the effect on two-phase air-in-water flow of concentrating all the air in a swirling, spiral flow down the centre of the pipe, so that only water flows close to the sensor electrodes in the flowmeter. The noise fluctuations picked up by the sensor electrodes are then greater in amplitude for swirling flow than when the air is more evenly distributed across the pipe, as is seen by comparing Figure 26 and 29, in which the power with swirl is 5.8 volts$^2$ compared with 1.8 volts$^2$ without swirl. The power spectrum of the noise signal generated with swirl is plotted in Figure 28, and is very smooth. A larger noise power has the advantage of making the analysis less susceptible to other sources of noise.

The mean square signal power $P_{ms}$ of the noise fluctuations in the sensor signal about the mean may be calculated as

$$P_{ms} = \frac{\sum_{n=1}^{N}\left(x(n) - \overline{x}\right)^2}{N}$$

where N is the number of sampled differential pressure signal values $x(n)$.

It has been found in all the examples described above that the presence of a secondary fluid phase within the primary phase occasions a change in the features of the (unconditioned signal from the primary sensor) flow measurement signal. Thus, for example, introducing air into water flowing at a constant rate produces changes in the features of the primary sensor signal. In the case of a variable area flowmeter, it is a change in the differential pressure and for a turbine flowmeter it is a change in the frequency of the sensor signal, which is an indicator of an increase in the mean velocity of flow. In addition, the rms fluctuation in the primary signal also increases, and it is this change, which hitherto has been regarded as redundant, that provides the important information regarding to the phase fractions in the two-phase flow. It is the relative magnitude of each phase in a gas-in-liquid flow regime that can be determined by analysis and manipulation of the sensor signal from the flowmeters.

It is envisaged that the method of the present invention may be applied to flow regimes other than those indicated above, and accordingly could be applicable to liquid-in-liquid flow regimes where the liquids are immiscible, to liquids or gases with entrained solids, and to three-phase flow regimes. A specific example of such flow regimes is that of steam flow to plants where it is the principal source of heat energy. Here, the quality or wetness fraction of the steam is of prime significance because it affects plant conditions and the overall performance.

The present invention thus provides a method for characterising a fluid flow by analysing the 'noise' component of the entire unconditioned sensor signal to provide an indication of the status of that flow, namely whether a single or two-phase flow is present, and for measuring the flow rates of either or both phases. The invention represents a clear departure from the conventional approach in flow measurement, which seeks to discard the 'noise' - the small low-level fluctuations in the sensor signal - whereas the present applicants have understood the importance attaching to the information contained within the 'noise'.

For flowmeters in which the primary sensor produces a given type of measurement signal (e.g. differential pressure, or frequency, or time period readings - see Table 1) the same methods may be applied to extract or recover additional information from the small fluctuations.

**Claims**

1. A method of measuring fluid flow rate in a two-phase fluid flow through a closed conduit including the disposition of a flowmeter in association with the conduit, the flowmeter being selected from the groups including a Venturi flowmeter, a wedge/differential pressure flowmeter, a target flowmeter, a nozzle/differential pressure flowmeter, a variable area/differential pressure flowmeter, an ultrasonic flowmeter, a turbine flowmeter, a Coriolis flowmeter, and an electromagnetic flowmeter, the fluid in use flowing within the conduit through the flowmeter, the method further comprising the steps of generating a signal indicative of the fluid flow rate, , measuring the amplitude and/or frequency components of the unconditioned sensed signal (s), including any fluctuations in said sensed signal (s), and analysing at least one of the components of the sensed signal (s) to determine a flow rate of at least one phase of the two-phase fluid flow; and **characterised in that** a swirl generator is included in the fluid flow conduit upstream of the selected flowmeter.

2. A method according to Claim 1 **characterised by** the step of determining the flow rate of a secondary phase of the two-phase flow.

3. A method according to Claim 1 **characterised by** the step of analysing at least one of the components of the sensed signal (s) to determine the volumetric or mass flow rate of each of the phases of the fluid flow.

4. A method according to any one of the preceding claims **characterised in that** a sensor of the selected flowmeter is associated with a primary transducer and is adapted to generate a differential pressure measurement signal having a square law or other known relationship with volumetric flow rate.

5. A method according to claim 4 wherein the flowmeter is a variable area flowmeter, the method further comprising the step of calculating a root mean square amplitude of the pressure fluctuations about a mean signal value ($\Delta P_{rms}$)

6. A method according to any one of the preceding Claims 1 to 3 **characterised in that** a sensor of the selected flowmeter is associated with a primary transducer and is adapted to generate a measurement signal in the frequency domain whereby the frequency is proportional to the volumetric flow rate.

7. A method according to claim 6 wherein the flowmeter is an electromagnetic flowmeter, and wherein the flowmeter is subjected to a steady state electromagnetic excitation.

8. A method according to any preceding claim further comprising the step of taking a fast fourier transform (FFT) of the signal data to obtain a noise power spectrum.

9. A method according to any one of the preceding Claims 1 to 3 **characterised in that** a sensor of the selected flowmeter is associated with a primary transducer and is adapted to generate an oscillatory measurement signal in which the frequency component is substantially proportional to the volumetric flow rate.

10. A method according to any one of the preceding Claims 1 to 3 **characterised in that** sensors of the selected flowmeter are associated with a primary transducer and are adapted to generate oscillatory measurement signals that are a complex function of the density of the fluid flow and the mass flow rate thereof.

11. A method according to claim 10 wherein the flowmeter is a Coriolis flowmeter, the method further comprising the step of calculating a root mean square deviation from an average frequency ($\Delta f_{rms}$).

12. A method according to any one of the preceding **characterised by** the step of calibrating the flowmeter.

13. A method according to Claim 12 as dependent on Claims 2 to 11 **characterised by** the deployment of two reference single-phase flowmeters in separate conduits in which the flows of two separate phase components are measured before they are combined to create a two-phase flow which is then passed through the selected single- phase flowmeter, and **characterised by** the steps of measuring and recording the respective flow rates through each of the reference flowmeters throughout the operational range of the selected flowmeter and simultaneously measuring and recording at each point the entire measurement signal generated by the sensor associated with the selected flowmeter (under test) thereby to recover signal data including but not limited to the signal amplitude (rms) and signal power, the spectral frequency components of the entire unconditioned sensor signal, in order to determine a relationship between the flow rates of the individual fluid flow phases and the said entire measurement signal and thus to calibrate the selected flowmeter against the data from the reference flowmeters.

14. A method according to Claim 12 **characterised by** the inclusion in an arrangement of conduits incorporating the selected flowmeter and two reference flowmeters appropriate for use with the primary and secondary phases and **characterised by** the steps of applying a two-phase fluid flow to the conduit and measuring the entire signal generated by the sensor associated with the primary transducer of the selected flowmeter at selected points throughout the operational range of the selected flowmeter thereby to determine a relationship between the flow rate of the primary phase and the entire measurement signal associated with the respective primary transducer, and thus to calibrate the selected flowmeter against the data from the reference flowmeter.

15. A method according to Claim 12 and 13 **characterised by** the inclusion in an arrangement of conduits incorporating the selected flowmeter and two reference flowmeters appropriate for the primary and secondary phases and **characterised by** the steps of applying a two-phase fluid flow to the conduit and measuring the entire signal generated by the sensor associated with the primary transducer of the reference flowmeter at selected points throughout the operational range of the selected flowmeter and the reference flowmeter appropriate for the primary phase fluid and a further reference flowmeter for the secondary phase fluid thereby to determine a relationship between the flow rates of the combination of the primary and secondary phases in the fluid flow and the entire measurement signal associated with the respective primary transducer, and thus to calibrate the selected flowmeter against the data from the reference flowmeters.

16. A method according to any one of the preceding Claims 13 to 15 **characterised in that** a flow conditioner is included in the fluid flow conduit upstream of the selected flowmeter.

17. A method according to Claim 12 and any claim dependent thereon **characterised in that** the calibration is conducted with two-phase fluid flow on the basis of gas-in-liquid phases.

18. A method according to Claim 12 and any one of Claims 13 to 16 **characterised in that** the calibration is conducted with two-phase fluid flow on the basis of liquid-in-gas phases.

19. A method according to Claim 18 **characterised in that** the change in the amplitude of the sensor signal is used as a determinant as to the presence of a secondary phase.

20. A method as claimed in any preceding claim wherein the two phase fluid is steam and water.

21. A method according to claim 20 including the step determining the quality of steam flowing in the conduit.

22. A method according to Claim 12 and any claim dependent thereon **characterised in that** the calibration is conducted with two-phase fluid flow on the basis of liquid-in-liquid phases.

23. A method according to Claim 12 and any claim dependent thereon **characterised in that** the calibration is conducted with two-phase fluid flow on the basis of solid-in-liquid phases.

24. A method according to claim 8 wherein the selected flowmeter is a variable area flowmeter and wherein the method further comprises summing the noise in a finite range within the spectrum.

25. A method according to claim 8 wherein the selected flowmeter is a variable area flowmeter and wherein the method further comprises determining mean values of a logarithmic power spectrum of the fluctuations.

**Patentansprüche**

1. Verfahren zum Messen der Durchflussrate von Fluid in einer Zweiphasen-Fluidströmung durch eine geschlossene Leitung, umfassend das Anbringen eines Durchflussmessers in Verbindung mit der Leitung, wobei der Durchflussmesser aus den Gruppen mit einem Venturi-Durchflussmesser, einem Keil-Differenzdruck-Durchflussmesser, einem Ziel-Durchflussmesser, einem Düsen-Differenzdruck-Durchflussmesser, einem Differenzdruck-Durchflussmesser mit variabler Fläche, einem Ultraschall-Durchflussmesser, einem Turbinen-Durchflussmesser, einem Coriolis-Durchflussmesser und einem elektromagnetischen Durchflussmesser ausgewählt wird, wobei das verwendete Fluid innerhalb der Leitung durch den Durchflussmesser fließt, wobei das Verfahren zudem die folgenden Schritte umfasst: Erzeugen eines Signals, das die Fluid-Durchflussrate anzeigt, Messen der Amplituden- und/oder Frequenzkomponenten des unkonditionierten aufgefangenen Signals (s), einschließlich aller Fluktuationen in dem aufgefangenen Signal (s), und Analysieren von mindestens einer der Komponenten des aufgefangenen Signals (s), um eine Durchflussrate von mindestens einer Phase der Zweiphasen-Fluidströmung zu bestimmen, und **dadurch gekennzeichnet, dass** ein Wirbelgenerator in die Fluidströmungsleitung stromaufwärts von dem ausgewählten Durchflussmesser eingebracht wird.

2. Verfahren nach Anspruch 1, gekennzeichnet durch den Schritt Bestimmen der Durchflussrate einer sekundären Phase der Zweiphasen-Strömung.

3. Verfahren nach Anspruch 1, gekennzeichnet durch den Schritt Analysieren von mindestens einer der Komponenten des aufgefangenen Signals (s), um die volumetrische oder Massen-Durchflussrate von jeder der Phasen der Fluidströmung zu bestimmen.

4. Verfahren nach einem der vorhergehenden Ansprüche, **dadurch gekennzeichnet, dass** ein Sensor des ausgewählten Durchflussmessers mit einem primären Wandler in Verbindung steht und dafür ausgelegt ist, ein Differenzdruck-Messsignal mit einem quadratischen Abstandsgesetz oder einer anderen bekannten Beziehung zu der volumetrischen Durchflussrate zu erzeugen.

5. Verfahren nach Anspruch 4, wobei der Durchflussmesser ein Durchflussmesser mit variabler Fläche ist, wobei das Verfahren zudem den Schritt umfasst: Berechnen einer Wurzel aus dem quadratischen Mittelwert für die Amplitude der Druckfluktuationen um einen mittleren Signalwert ($\Delta P_{rms}$).

6. Verfahren nach einem der vorhergehenden Ansprüche 1 bis 3, **dadurch gekennzeichnet, dass** ein Sensor des ausgewählten Durchflussmessers mit einem primären Wandler in Verbindung steht und dafür ausgelegt ist, ein Messsignal in der Frequenzdomäne zu erzeugen, wodurch die Frequenz proportional zur volumetrischen Durchflussrate ist.

7. Verfahren nach Anspruch 6, wobei der Durchflussmesser ein elektromagnetischer Durchflussmesser ist und wobei der Durchflussmesser einer elektromagnetischen Steady State-Anregung unterzogen wird.

8. Verfahren nach einem vorhergehenden Anspruch, das zudem den Schritt umfasst: Durchführen einer schnellen Fourier-Transformation von den Signaldaten, um ein Rauschleistungsspektrum zu erhalten.

9. Verfahren nach einem der vorhergehenden Ansprüche 1 bis 3, **dadurch gekennzeichnet, dass** ein Sensor des ausgewählten Durchflussmessers mit einem primären Wandler in Verbindung steht und dafür ausgelegt ist, ein oszillatorisches Messsignal zu erzeugen, in dem die Frequenzkomponente im Wesentlichen proportional zur volumetrischen Durchflussrate ist.

10. Verfahren nach einem der vorhergehenden Ansprüche 1 bis 3, **dadurch gekennzeichnet, dass** Sensoren des ausgewählten Durchflussmessers mit einem primären Wandler in Verbindung stehen und dafür ausgelegt sind, oszillatorische Messsignale zu erzeugen, die eine komplexe Funktion der Dichte der Fluidströmung und von deren Massen-Durchflussrate sind.

11. Verfahren nach Anspruch 10, wobei der Durchflussmesser ein Coriolis-Durchflussmesser ist, wobei das Verfahren zudem den Schritt umfasst: Berechnen einer Wurzel aus der mittleren quadratischen Abweichung von einer durchschnittlichen Frequenz ($\Delta f_{rms}$).

12. Verfahren nach einem der vorhergehenden Ansprüche, gekennzeichnet durch den Schritt Kalibrieren des Durchflussmessers.

13. Verfahren nach Anspruch 12, soweit abhängig von den Ansprüchen 2 bis 11, gekennzeichnet durch das Einbringen von zwei Bezugs-Einphasen-Durchflussmessern in getrennte Leitungen, in denen die Strömungen von zwei separaten Phasenkomponenten gemessen und anschließend unter Erstellung einer Zweiphasen-Strömung kombiniert werden, die dann durch den ausgewählten Einphasen-Durchflussmesser geleitet wird, und gekennzeichnet durch die Schritte: Messen und Aufzeichnen der jeweiligen Durchflussraten durch jeden der Bezugs-Durchflussmesser über den gesamten Betriebsbereich des ausgewählten Durchflussmessers und gleichzeitiges Messen und Aufzeichnen an jedem Punkt des gesamten Messsignals, das von dem Sensor erzeugt wird, der mit dem ausgewählten Durchflussmesser (der geprüft wird) in Verbindung steht, um dadurch Signaldaten zu gewinnen, einschließlich der Signalamplitude (rms) und der Signalleistung, der spektralen Frequenzkomponenten des gesamten unkonditionierten Sensorsignals, aber nicht auf diese beschränkt, um eine Beziehung zwischen den Durchflussraten der einzelnen Fluidströmungsphasen und dem gesamten Messsignal zu ermitteln und somit den ausgewählten Durchflussmesser anhand der Daten von den Bezugs-Durchflussmessern zu kalibrieren.

14. Verfahren nach Anspruch 12, gekennzeichnet durch das Einschließen in eine Anordnung von Leitungen, die den ausgewählten Durchflussmesser und zwei Bezugs-Durchflussmesser enthalten, die geeignet sind für die Verwendung mit der primären und sekundären Phase, und gekennzeichnet durch die Schritte: Fließenlassen einer Zweiphasen-Fluidströmung in der Leitung und Messen des gesamten erzeugten Signals von dem Sensor, der mit dem primären Wandler des ausgewählten Durchflussmessers in Verbindung steht, an ausgewählten Punkten über den gesamten Betriebsbereich des ausgewählten Durchflussmessers, um dadurch eine Beziehung zwischen der Strömungsrate der primären Phase und dem gesamten Messsignal in Verbindung mit dem entsprechenden primären Wandler zu ermitteln und so den ausgewählten Durchflussmesser anhand der Daten von dem Bezugs-Durchflussmesser zu kalibrieren.

15. Verfahren nach Anspruch 12 und 13, gekennzeichnet durch das Einschließen in eine Anordnung von Leitungen, die den ausgewählten Durchflussmesser und zwei Bezugs-Durchflussmesser enthalten, die geeignet sind für die primäre und sekundäre Phase, und gekennzeichnet durch die Schritte: Fließenlassen einer Zweiphasen-Fluidströmung in der Leitung und Messen des gesamten erzeugten Signals von dem Sensor, der mit dem primären Wandler des Bezugs-Durchflussmessers in Verbindung steht, an ausgewählten Punkten über den gesamten Betriebsbereich des ausgewählten Durchflussmessers und des Bezugs-Durchflussmessers, das für das Fluid der primären Phase geeignet ist, und eines weiteren Bezugs-Durchflussmessers für das Fluid der sekundären Phase, um dadurch eine Beziehung zwischen den Durchflussraten der Kombination der primären und der sekundären Phase in der Fluidströmung und dem gesamten Messsignal in Verbindung mit dem jeweiligen primären Wandler zu ermitteln und so den ausgewählten Durchflussmesser anhand der Daten von den Bezugs-Durchflussmessern zu kalibrieren.

16. Verfahren nach einem der vorhergehenden Ansprüche 13 bis 15, **dadurch gekennzeichnet, dass** ein Strömungskonditionierer in die Fluidströmungsleitung stromaufwärts des ausgewählten Durchflussmessers eingebracht wird.

17. Verfahren nach Anspruch 12 und einem davon anhängigen Anspruch, **dadurch gekennzeichnet, dass** die Kalibrierung mit Zweiphasen-Fluidströmung auf der Basis von Gas-in-Flüssigkeit-Phasen durchgeführt wird.

18. Verfahren nach Anspruch 12 und einem der Ansprüche 13 bis 16, **dadurch gekennzeichnet, dass** die Kalibrierung mit Zweiphasen-Fluidströmung auf der Basis von Flüssigkeit-in-Gas-Phasen durchgeführt wird.

19. Verfahren nach Anspruch 18, **dadurch gekennzeichnet, dass** die Veränderung in der Amplitude des Sensorsignals als Determinante bezüglich des Vorliegens einer sekundären Phase verwendet wird.

20. Verfahren nach einem vorhergehenden Anspruch, wobei es sich bei dem Zweiphasen-Fluid um Dampf und Wasser handelt.

21. Verfahren nach Anspruch 20, das den Schritt umfasst: Bestimmen der Qualität von in einer Leitung strömendem Dampf.

22. Verfahren nach Anspruch 12 und einem davon anhängigen Anspruch, **dadurch gekennzeichnet, dass** die Kalibrierung mit Zweiphasen-Fluidströmung auf der Basis von Flüssigkeit-in-Flüssigkeit-Phasen durchgeführt wird.

23. Verfahren nach Anspruch 12 und einem davon anhängigen Anspruch, **dadurch gekennzeichnet, dass** die Kalibrierung mit Zweiphasen-Fluidströmung auf der Basis von Feststoff-in-Flüssigkeit-Phasen durchgeführt wird.

24. Verfahren nach Anspruch 8, wobei der ausgewählte Durchflussmesser ein Durchflussmesser mit variabler Fläche ist und wobei das Verfahren zudem umfasst: Summieren des Rauschens in einem endlichen Bereich innerhalb des Spektrums.

25. Verfahren nach Anspruch 8, wobei der ausgewählte Durchflussmesser ein Durchflussmesser mit variabler Fläche ist und wobei das Verfahren zudem umfasst: Bestimmen von Mittelwerten von einem logarithmischen Leistungsspektrum der Fluktuationen.

**Revendications**

1. Procédé de mesure d'un débit d'écoulement de fluide dans un écoulement de fluide biphasique à travers une conduite fermée, incluant la disposition d'un débitmètre en association avec la conduite, le débitmètre étant sélectionné dans les groupes incluant un débitmètre de Venturi, un débitmètre à coin/pression différentielle, un débitmètre cible, un débitmètre à bec/pression différentielle, un débitmètre à zone variable/de pression différentielle, un débitmètre ultrasonique, un débitmètre à turbine, un débitmètre de Coriolis et un débitmètre électromagnétique, le fluide en utilisation s'écoulant dans la conduite à travers le débitmètre, le procédé comprenant en outre les étapes consistant à produire un signal indicatif du débit d'écoulement du fluide, à mesurer les composantes d'amplitude et/ou de fréquence du signal détecté non conditionné (s), incluant toute fluctuation dans ledit signal détecté (s), et à analyser au moins une des composantes du signal détecté (s) pour déterminer un débit d'écoulement d'au moins une phase de l'écoulement de fluide biphasique ; et **caractérisé en ce qu'**un générateur de tourbillon est inclus dans la conduite d'écoulement du fluide en amont du débitmètre sélectionné.

2. Procédé selon la revendication 1, **caractérisé par** l'étape consistant à déterminer le débit d'écoulement d'une phase secondaire de l'écoulement biphasique.

3. Procédé selon la revendication 1, **caractérisé par** l'étape consistant à analyser au moins une des composantes du signal détecté (s) afin de déterminer le débit volumétrique ou d'écoulement massique de chacune des phases de l'écoulement du fluide.

4. Procédé selon l'une quelconque des revendications précédentes, **caractérisé en ce qu'**un capteur du débitmètre sélectionné est associé à un transducteur primaire et est apte à produire un signal de mesure de pression différentielle ayant une relation de loi carrée ou autre relation connue avec le débit d'écoulement volumétrique.

5. Procédé selon la revendication 4, dans lequel le débitmètre est un débitmètre à zone variable, le procédé comprenant en outre l'étape de calcul de l'amplitude moyenne quadratique pondérée des fluctuations de pression autour d'une valeur de signal moyenne ($\Delta P_{rms}$).

6. Procédé selon l'une quelconque des revendications 1 à 3, **caractérisé en ce qu'**un capteur du débitmètre sélectionné est associé à un transducteur primaire et est apte à produire un signal de mesure dans le domaine fréquentiel moyennant quoi la fréquence est proportionnelle au débit d'écoulement volumétrique.

7. Procédé selon la revendication 6, dans lequel le débitmètre est un débitmètre électromagnétique, et où le débitmètre est soumis à une excitation électromagnétique d'un état régulier.

8. Procédé selon l'une quelconque des revendications précédentes, comprenant en outre l'étape consistant à prendre une transformation de Fourier rapide (FFT) des données du signal pour obtenir un spectre de puissance de bruit.

9. Procédé selon l'une quelconque des revendications précédentes 1 à 3, **caractérisé en ce qu'**un capteur du débitmètre sélectionné est associé à un transducteur primaire et est apte à produire un signal de mesure d'oscillation dans lequel la composante fréquentielle est sensiblement proportionnelle au débit d'écoulement volumétrique.

10. Procédé selon l'une quelconque des revendications précédentes 1 à 3, **caractérisé en ce que** des capteurs du débitmètre sélectionné sont associés à un transducteur primaire et sont aptes à produire des signaux de mesure d'oscillation qui sont une fonction complexe de la densité de l'écoulement du fluide et du taux d'écoulement massique de celui-ci.

11. Procédé selon la revendication 10, dans lequel le débitmètre est un débitmètre de Coriolis, le procédé comprenant en outre l'étape consistant à calculer un écart quadratique moyen d'une fréquence moyenne ($\Delta f_{rms}$).

12. Procédé selon l'une quelconque des revendications précédentes, **caractérisé par** l'étape du calibrage du débitmètre.

13. Procédé selon la revendication 12 dépendant des revendications 2 à 11, **caractérisé par** le déploiement de deux débitmètres monophasiques de référence dans des conduites séparées dans lesquelles les écoulements de deux composants de phases séparées sont mesurés avant qu'ils ne soient combinés pour créer un écoulement biphasique qu'on fait ensuite passer à travers le débitmètre monophasique sélectionné, et **caractérisé par** les étapes consistant à mesurer et à enregistrer les débits d'écoulement respectifs à travers chacun des débitmètres de référence dans toute la plage fonctionnelle du débitmètre sélectionné, et à mesurer et à enregistrer simultanément à chaque point la totalité du signal de mesure produit par le capteur associé au débitmètre sélectionné (sous test) pour ainsi récupérer des données de signal incluant, mais n'étant pas limitées à l'amplitude du signal (rms) et à la puissance du signal, les composantes de fréquence spectrale de l'ensemble du signal de capteur non conditionné, afin de déterminer une relation entre les débits d'écoulement des phases d'écoulement de fluide individuelles et ledit signal de mesure dans son ensemble et pour calibrer ainsi le débitmètre sélectionné contre les données des débitmètres de référence.

14. Procédé selon la revendication 12, **caractérisé par** l'inclusion dans un agencement de conduites incorporant le débitmètre sélectionné et deux débitmètres de référence aptes à être utilisés avec les phases primaire et secondaire, et **caractérisé par** les étapes consistant à appliquer un écoulement de fluide biphasique à la conduite et à mesurer tout le signal produit par le capteur associé au transducteur primaire du débitmètre sélectionné à des points sélectionnés dans toute la plage fonctionnelle du débitmètre sélectionné pour déterminer ainsi une relation entre le débit d'écoulement de la phase primaire et tout le signal de mesure associé au transducteur primaire respectif, et pour calibrer ainsi le débitmètre sélectionné contre les données du débitmètre de référence.

**15.** Procédé selon la revendication 12 et 13, **caractérisé par** l'inclusion dans un agencement de conduites incorporant le débitmètre sélectionné et deux débitmètres de références qui conviennent aux phases primaire et secondaire, et **caractérisé par** les étapes consistant à appliquer un écoulement de fluide biphasique à la conduite et à mesurer tout le signal produit par le capteur associé au transducteur primaire du débitmètre de référence à des points sélectionnés dans toute la plage opérationnelle du débitmètre sélectionné et du débitmètre de référence qui convient pour le fluide de phase primaire, et un autre débitmètre de référence pour le fluide de phase secondaire pour déterminer ainsi une relation entre les débits d'écoulement de la combinaison des phases primaire et secondaire dans l'écoulement du fluide, et tout le signal de mesure associé au transducteur primaire respectif, et pour calibrer ainsi le débitmètre sélectionné contre les données des débitmètres de référence.

**16.** Procédé selon l'une quelconque des revendications précédentes 13 à 15, **caractérisé en ce qu'**un conditionneur d'écoulement est inclus dans la conduite d'écoulement de fluide en amont du débitmètre sélectionné.

**17.** Procédé selon la revendication 12 et n'importe quelle revendication dépendant de celle-ci, **caractérisé en ce que** le calibrage est effectué avec l'écoulement de fluide biphasique sur la base de phases gaz-dans-liquide.

**18.** Procédé selon la revendication 12 et l'une quelconque des revendications 13 à 16, **caractérisé en ce que** le calibrage est exécuté avec un écoulement de fluide biphasique sur la base de phases liquide-dans-gaz.

**19.** Procédé selon la revendication 18, **caractérisé en ce que** le changement dans l'amplitude du signal du capteur est utilisé comme un déterminant quant à la présence d'une phase secondaire.

**20.** Procédé selon l'une quelconque des revendications précédentes, dans lequel le fluide biphasique est de la vapeur et de l'eau.

**21.** Procédé selon la revendication 20, incluant l'étape déterminant la qualité de la vapeur s'écoulant dans la conduite.

**22.** Procédé selon la revendication 12 et l'une quelconque des revendications dépendant de celle-ci, **caractérisé en ce que** le calibrage est exécuté avec l'écoulement de fluide biphasique sur la base de phases liquide-dans-liquide.

**23.** Procédé selon la revendication 12 et l'une quelconque des revendications dépendant de celle-ci, **caractérisé en ce que** le calibrage est exécuté avec l'écoulement de fluide biphasique sur la base de phases solide-dans-liquide.

**24.** Procédé selon la revendication 8, dans lequel le débitmètre sélectionné est un débitmètre à zone variable, et où le procédé comprend en outre l'addition du bruit dans une plage finie dans le spectre.

**25.** Procédé selon la revendication 8, dans lequel le débitmètre sélectionné est un débitmètre à zone variable, et où le procédé comprend en outre la détermination de valeurs moyennes d'un spectre de puissance logarithmique des fluctuations.

| Group | Primary Transducer Signal | Flowmeter Type |
|---|---|---|
| Group 1 | Differential Pressure | Variable Area<br>Target<br>V-Cone<br>Venturi<br>Nozzle<br>Wedge |
| Group 2 | Oscillatory Signal with the frequency proportional to flow rate | Turbine<br>Ultrasonic Doppler |
| Group 3 | Oscillatory Signal which is a complex function of mass flow rate and fluid density | Coriolis |
| Group 4 | Induced Voltage | Electromagnetic |

Figure 1. shows the test flow rig used to pump a controlled flow of water into which air can be injected to create two-phase flow. Both single-phase flows are measured before mixing, and by the flowmeter under test after mixing.

Figure 2.  is a schematic diagram of a variable area (Gilflo™ ) flowmeter

Figure 3.  is a schematic diagram of a V-Cone flowmeter.

Figure 4.

Figure 5.

Figure 6.

Figure 7.

Figure 8.

Figure 9.

Figure 10.

Figure 11.

Figure 12.

Figure 13.

Figure 14.

Figure 15.

Figure 16.

Figure 17.

Figure 18. Schematic diagram of flow loop for measurement of two-phase flow through an EM meter, with a flow conditioner placed just before the EM flowmeter.

Figure 19.

Figure 20.

Figure 21.

Figure 22.

Figure 23.

Figure 24.

Figure 25.

Figure 26.

Figure 27. Schematic diagram of flow loop for calibration of two-phase flow through an EM meter, with a swirl generator placed before the EM meter to mix the phases

Figure 28.

Figure 29.

Figure 30.

Figure 31.

Figure 32.

Figure 33.

Figure 34.

Figure 35.

Figure 36.

Figure 37.

Figure 38.

**EP 1 554 550 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 0212739 A

- EP 0519752 A

**Non-patent literature cited in the description**

- **FERREIRA V. C. S.** *Int. J. Press. Vessels Pip.,* August 1997, vol. 73 (1), 19-23
- **KHAN H. J. et al.** *ASME Fluids Engineering Division Meeting,* 20 June 1993, vol. 165, 137-144

- **PEROVIC S. et al.** *Proc. Inst. Mech. Eng. E, J. Process Mech. Eng. (UK),* 2001, vol. 215 (E4), 283-294
- **LAWS, E. M.** Flow conditioning - a new development. *Flow Measurement. Instrumentation,* 1990, vol. 1 (3), 165-170